(19) **Europäisches Patentamt European Patent Office Office européen des brevets**

(11) **EP 4 757 268 A1**

(12) **EUROPEAN PATENT APPLICATION**
published in accordance with Art. 153(4) EPC

(43) Date of publication:
10.06.2026  Bulletin 2026/24

(21) Application number: 24848169.9

(22) Date of filing: 26.07.2024

(51) International Patent Classification (IPC):
*H04L 43/02* (2022.01)  *H04W 64/00* (2009.01)

(52) Cooperative Patent Classification (CPC):
H04L 43/02; H04W 64/00; H04W 72/542;
H04W 76/10

(86) International application number:
PCT/CN2024/107788

(87) International publication number:
WO 2025/026212 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  02.08.2023  CN 202310964751

(71) Applicant: Sony Group Corporation
Tokyo 108-0075 (JP)

(72) Inventors:
• WANG, Zhaocheng
  Beijing 100084 (CN)
• LI, Haojin
  Beijing 100027 (CN)
• SUN, Chen
  Beijing 100027 (CN)
• ZHUO, Yinxiao
  Beijing 100084 (CN)

(74) Representative: D Young & Co LLP
3 Noble Street
London EC2V 7BQ (GB)

(54) **NETWORK-SIDE DEVICE, ELECTRONIC DEVICE AND METHODS FOR WIRELESS COMMUNICATION**

(57)    The present application relates to a network-side device, electronic device and methods for wireless communication. The network-side device for wireless communication comprises a processing circuit, which is configured to: for a target object which is within a sensing coverage range of the network-side device, but has not established a communication connection with the network-side device, hand over a target tracking task for the target object to a network-side device that awaits a handover and that the target object is about to enter a sensing coverage range thereof, so that the network-side device that awaits a handover performs target tracking on the target object, wherein the processing circuit is configured to send to the network-side device that awaits a handover identification information for identifying the target object, so that the network-side device that awaits a handover identifies the target object on the basis of the identification information.

FIG.1

EP 4 757 268 A1

## Description

The present application claims priority to Chinese Patent Application No. 202310964751.4, titled "NETWORK-SIDE DEVICE, ELECTRONIC DEVICE AND METHODS FOR WIRELESS COMMUNICATION", filed on August 2, 2023 with the China National Intellectual Property Administration, which is incorporated herein by reference in its entirety.

## FIELD

The present disclosure relates to the technical field of wireless communications, specifically to a network side equipment, an electronic apparatus and a method for wireless communications. More specifically, the present disclosure relates to a network side equipment, an electronic apparatus and a method for wireless communications related to a target tracking task.

## BACKGROUND

Integrated sensing and communication is an important research direction for enhancing the value of a communication core network, and it has promising application prospects in fields such as smart home, intelligent transportation, environmental monitoring and hazard warning. Therefore, integrated sensing and communication technology is one of popular researches at present. In an application of integrated sensing and communication, monitoring road conditions by a roadside base station or a roadside unit is a typical application scenario, which has a high practical value in traffic flow control, vehicle platooning, vehicle collision warning, and tracking of escaping vehicles. A target tracking task a typical service in a sensing and communication application for a roadside base station. The target tracking task requires the roadside base station or the roadside unit to continuously acquire sensing information, such as a position and a speed, of a target through a sensing signal, and even to acquire a movement path of the target over a long period of time.

In a target tracking service, a target usually moves across base stations or roadside units. In order to ensure service continuity (to meet the requirement of long-term target tracking), transfer of the target tracking service is required. That is, in the target tracking service, due to a long service duration and a large activity range of the target, service continuity of the target tracking service in a scenario where the target moves across base stations or roadside units should be guaranteed. However, transfer of the target tracking service requires target re-identification, and therefore a transfer process of communication services cannot be directly applied.

A conventional integrated sensing and communication system typically performs ranging based on echo delay and performs speed measurement based on Doppler effect. However, only a radial speed of a target relative to a base station is measured with the Doppler effect. For a roadside base station or a roadside unit, a speed of the target along the road (with a main component being a tangential speed) is usually information to be focused in applications. Therefore, the speed measurement based on Doppler effect results in significant speed measurement errors, and other solutions are required to achieve speed measurement as required for the service. In an existing solution, positioning and speed measurement is performed by combining single-beam angular information with ranging information. Such solution has a low accuracy in positioning and thereby a low accuracy in speed measurement, and the accuracy is strongly affected by a beamwidth. In another solution, a speed of a target along a road is estimated based on a radial speed through geometric relationships. Such solution is strongly affected by an error of angle estimation, and a large error of the estimated speed occurs when a target velocity is not strictly along the road. Therefore, a target tracking method having a high precision is required to fulfill requirements of speed measurement.

## SUMMARY

A brief summary of the present disclosure is given below, to provide a basic understanding of some aspects of the present disclosure. It should be understood that the summary is not an exhaustive summary of the present disclosure. It does not intend to determine a key or important part of the present disclosure, nor does it intend to limit the scope of the present disclosure. Its objective is only to present some concepts in a simplified form, which serves as a preamble of a more detailed description to be discussed later.

According to an aspect of the present disclosure, a network side equipment for wireless communications is provided. The network side equipment for wireless communications includes processing circuitry configured to: transfer, for a target object that is within a sensing coverage of the network side equipment and establishes no communication connection with the network side equipment, a target tracking task for the target object to a to-be-transferred network side equipment where the target object is to enter a sensing coverage of the to-be-transferred network side equipment, for the to-be-transferred network side equipment to perform target tracking on the target object, where the processing circuitry is configured to send identification information for identifying the target object to the to-be-transferred network side equipment, for the to-be-transferred network side equipment to identify the target object based on the identification information. According to the embodiment of the present disclosure, service continuity of the target tracking is ensured.

According to an aspect of the present disclosure, an electronic apparatus for wireless communications is provided. The electronic apparatus includes processing circuitry configured to: sense, for a target object that is within a sensing coverage of a network side equipment providing a service for the electronic apparatus and establishes no communication connection with the network side equipment, the target object to acquire sensing information about the target object; and send the sensing information to the network side equipment for the network side equipment to perform target tracking on the target object based on the sensing information. The electronic apparatus according to the embodiment of the present disclosure is capable of performing cooperative sensing with the network side equipment providing service thereto.

According to an aspect of the present disclosure, a method for wireless communications performed by a network side equipment is provided. The method includes: transferring, for a target object that is within a sensing coverage of the network side equipment and establishes no communication connection with the network side equipment, a target tracking task for the target object to a to-be-transferred network side equipment where the target object is to enter a sensing coverage of the to-be-transferred network side equipment, for the to-be-transferred network side equipment to perform target tracking on the target object, where the network side equipment sends identification information for identifying the target object to the to-be-transferred network side equipment, for the to-be-transferred network side equipment to identify the target object based on the identification information.

According to an aspect of the present disclosure, a method for wireless communications performed by an electronic apparatus is provided. The method includes: sensing, for a target object that is within a sensing coverage of a network side equipment providing a service for the electronic apparatus and establishes no communication connection with the network side equipment, the target object to acquire sensing information about the target object; and sending the sensing information to the network side equipment for the network side equipment to perform target tracking on the target object based on the sensing information.

According to other aspects of the present disclosure, a computer program code and a computer program product for implementing the above-described method for wireless communications, and a computer-readable storage medium recording the computer program code for implementing the above-described method for wireless communications are further provided.

**BRIEF DESCRIPTION OF THE DRAWINGS**

In order to further set forth the above and other advantages and features of the present disclosure, specific embodiments of the present disclosure are further described in detail below in conjunction with the accompanying drawings. The accompanying drawings together with the following detailed description are included in this specification and form a part of this specification. Elements with identical functions and structures are denoted by identical reference numerals. It should be understood that these figures describe only typical examples of the present disclosure, and should not be regarded as limitations to the scope of the present disclosure. In the accompanying drawings:

FIG. 1 shows a block diagram of functional modules of a network side equipment for wireless communications according to an embodiment of the present disclosure;

FIG. 2 is a schematic diagram illustrating a sensing service of a network side equipment according to an embodiment of the present disclosure;

FIG. 3 is a schematic diagram illustrating a target tracking broadcast warning performed by a network side equipment according to an embodiment of the present disclosure;

FIG. 4 is an example illustrating a flowchart of requesting for a target tracking service by a service initiator;

FIG. 5 is a schematic diagram illustrating a target tracking channel model;

FIG. 6 is a diagram illustrating an example of transfer of target tracking according to an embodiment of the present disclosure;

FIG. 7 is a schematic diagram illustrating an example of a target tracking service flow according to an embodiment of the present disclosure;

FIG. 8 is an example flow illustrating a communication service transfer in a conventional technology;

FIG. 9 is an example flowchart illustrating target re-identification according to an embodiment of the present disclosure;

FIG. 10 is an example flowchart illustrating transfer of a target tracking task based on an Xn interface according to an embodiment of the present disclosure;

FIG. 11 is an example flowchart illustrating transfer of a target tracking task based on an N2 interface according to an embodiment of the present disclosure;

FIG. 12 is an example flowchart illustrating target tracking according to an embodiment of the present disclosure;

FIG. 13 is a schematic diagram illustrating a solution for speed measurement based on geometric correction in a conventional technology;

FIG. 14 is a schematic diagram illustrating an example of multi-beam target tracking according to an embodiment of the present disclosure;

FIG. 15 is a schematic diagram illustrating an example of adjusting a central axis of multiple beams according to an embodiment of the present disclosure;

FIG. 16 is a schematic diagram illustrating an example of adaptive adjustment of an included angle between two beams according to an embodiment of the present disclosure;

FIG. 17 is a schematic diagram illustrating an example of adaptive adjustment of direction of a central axis of two beams according to an embodiment of the present disclosure;

FIG. 18 is an example diagram illustrating positioning estimation errors at different signal-to-noise ratios in target tracking with two beams according to an embodiment of the present disclosure;

FIG. 19 is an example diagram illustrating speed estimation errors at different signal-to-noise ratios in target tracking with two beams according to an embodiment of the present disclosure;

FIG. 20 is an example flowchart illustrating cooperative sensing according to an embodiment of the present disclosure;

FIG. 21 is a schematic diagram illustrating tracking on a target object and processing of tracking data according to an embodiment of the present disclosure;

FIG. 22 shows a block diagram of functional modules of an electronic apparatus for wireless communications according to another embodiment of the present disclosure;

FIG. 23 is a flowchart illustrating a method for wireless communications performed by a network side equipment according to an embodiment of the present disclosure;

FIG. 24 is a flowchart illustrating a method for wireless communications performed by an electronic apparatus according to another embodiment of the present disclosure;

FIG. 25 is a block diagram illustrating a first example of a schematic configuration of an eNB or gNB to which the technology according to the present disclosure may be applied;

FIG. 26 is a block diagram illustrating an example of a schematic configuration of a smart phone to which the technology according to the present disclosure may be applied;

FIG. 27 is a block diagram illustrating an example of a schematic configuration of a vehicle navigation apparatus to which the technology according to the present disclosure may be applied; and

FIG. 28 is a block diagram illustrating an exemplary structure of a general-purpose personal computer in which a method and/or apparatus and/or system according to embodiments of the present disclosure may be implemented.

**DETAILED DESCRIPTION**

Exemplary embodiments of the present disclosure are described below in conjunction with the accompanying drawings. For the sake of clarity and conciseness, not all features of actual embodiments are described in the specification. However, it should be understood that many implementation-specific decisions shall be made while developing any of such actual embodiments so as to achieve specific objectives of a developer, for example, to conform to limitation conditions related to systems and services, where these limitation conditions may possibly vary depending on different embodiments. In addition, it should be appreciated that the development work, although may be complicated and time-consuming, is only a routine task for those skilled in the art benefiting from the present disclosure.

Here, it should be further noted that, to avoid obscuring the present disclosure due to unnecessary details, only apparatus structures and/or processing steps closely related to the solution according to the present disclosure are shown in the accompanying drawings, and other details less related to the present disclosure are omitted.

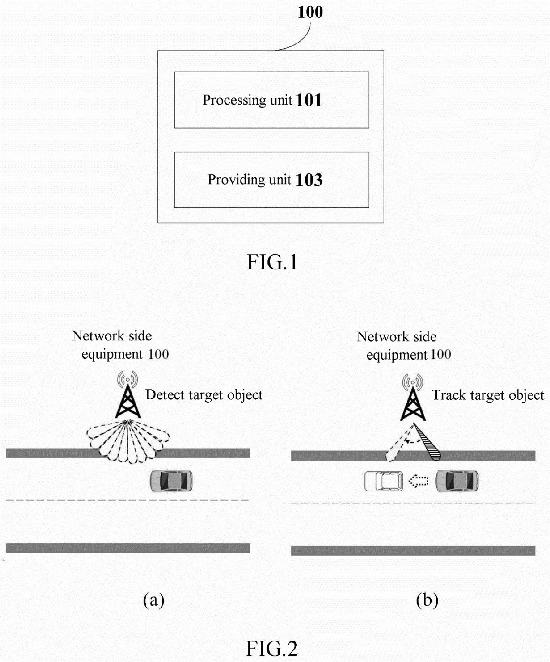

FIG. 1 shows a block diagram of functional modules of a network side equipment 100 for wireless communications according to an embodiment of the present disclosure.

As shown in FIG. 1, the network side equipment 100 includes a processing unit 101 and a providing unit 103. The processing unit 101 may be configured to transfer, for a target object that is within a sensing coverage of the network side equipment 100 and establishes no communication connection with the network side equipment 100, a target tracking task for the target object to a to-be-transferred network side equipment where the target object is to enter a sensing coverage of the to-be-transferred network side equipment, for the to-be-transferred network side equipment to perform target tracking on the target object. The providing unit 103 may be configured to send identification information for identifying the target object to the to-be-transferred network side equipment, for the to-be-transferred network side equipment to identify the target object based on the identification information.

The processing unit 101 and the providing unit 103 may be implemented by one or more processing circuits, which may, for example, be implemented as a chip or a processor. In addition, it should be understood that the functional units in the network side equipment 100 shown in FIG. 1 are merely logical modules defined according to specific functions implemented, and are not intended to limit a specific implementation.

For example, the network side equipment 100 may be arranged at a base station side or communicatively connected to a base station, or may be arranged at a roadside unit side or communicatively connected to a roadside unit. It should be further noted that the network side equipment 100 may be implemented at a chip level, or may alternatively be implemented at an apparatus level. For example, the network side equipment 100 may operate as a base station or a roadside unit itself, and may further include external devices such as a memory and a transceiver (not shown). The memory may be configured to store programs to be executed by the network side equipment 100 to implement various functions and related data information. The transceiver may include one or more communication interfaces to support communication with different devices (for example, a UE, a base station, or a roadside unit). An implementation of the transceiver is not limited here.

As an example, the base station may be an eNB or gNB.

According to the present disclosure, a wireless communication system may include both a sensing function and a communication function. For example, the wireless communication system according to the present disclosure may be a 5G New Radio (NR) communication system, a 5G+ communication system, or a 6G communication system. Furthermore, the wireless communication system according to the present disclosure may include a non-terrestrial network (NTN). Optionally, the wireless communication system may further include a terrestrial network (TN). In addition, it will be understood by those skilled in the art that the wireless communication system according to the present disclosure may be a 4G or 3G communication system. In the following description, an integrated sensing and communication (ISAC) system (simplified as an integrated sensing-communication system) is described as an example.

In target tracking, a tracked target object is typically not communicatively connected to the network, and therefore cannot be identified through a network address. As a result, a transfer process of a communication service cannot be directly applied. The transfer of a target tracking task (also referred to as a target tracking service) requires a to-be-transferred network side equipment to re-identify the target object (that is, target re-identification).

With the network side equipment 100 according to the embodiment of the present disclosure, in a scenario where the target object moves continuously across base stations or roadside units, even if the target object establishes no communication connection with the network side equipment 100, the to-be-transferred network side equipment is able to identify the target object based on identification information and thereby perform target tracking on the target object. As a result, the effectiveness and continuity of the target tracking service is ensured.

As an example, the network side equipment 100 may be a base station. For instance, the base station may be arranged on the ground, an airship, or an unmanned aerial vehicle, and the target object may be arranged on the ground, an airship, or an unmanned aerial vehicle.

As an example, the network side equipment 100 may be a roadside unit, which may be arranged on a street lamp, for example.

In the following description, for simplicity, the network side equipment 100 is described as a base station as an example. The target object is sometimes referred to as an object or a tracked target, and the target tracking task is sometimes referred to as a target tracking service.

Before introducing the transfer of the target tracking task for the network side equipment 100, a brief introduction to the target tracking performed by the network side equipment 100 is provided.

An integrated sensing-communication system integrates a sensing service into a communication system, and enables the sensing service through a communication core network, thereby enhancing an added value of a communication network. Application for a roadside base station is a typical application scenario of the integrated sensing-communication system. In this scenario, the base station is arranged at a roadside, and a coverage of a cell mainly includes traffic roads. A primary communication service of the roadside base station is to provide communication services to users on the traffic roads, for example, to provide network services to pedestrians or vehicle passengers, and to provide vehicle platooning networking or information distribution service for platooned vehicles. A primary sensing service of the roadside base station includes monitoring traffic flow on the roads, such as road traffic volume statistics, traffic congestion determination, suspicious vehicle tracking, and collision warning for hazardous vehicles. FIG. 2 is a schematic diagram illustrating a sensing service of the network side equipment 100 according to an embodiment of the present disclosure. The sensing service generally includes a scanning detection service and a target tracking service. (a) of FIG. 2 shows an example of the scanning detection service, and (b) of FIG. 2 shows an example of the target tracking service. An objective of the scanning detection service is to determine presence or absence of a target, for example, for intrusion detection or traffic flow monitoring. The scanning detection service generally requires a large sensing range and a short sensing duration. The target is less known before the detection is completed. Upon completion of the detection, an approximate instantaneous position, a speed, or other information of the detected target may be obtained based on a sensing signal. An objective of the target tracking service is to continuously acquire information such as a position and speed of a certain target over a long period of time, for example, for hazardous driving warning. The target tracking service generally requires a small sensing range (broad-area sensing is not necessary, as long as the sensing range covers the to-be-tracked target) and a long sensing duration. Prior to target tracking, basic information of the target is acquired through scanning detection or other manners, and the tracking continues until the target is lost or the target tracking service is terminated.

The target tracking service is a typical service requirement of the integrated sensing-communication system. For example, some possible application scenarios of the target tracking service include the following (1), (2), (3) and (4).

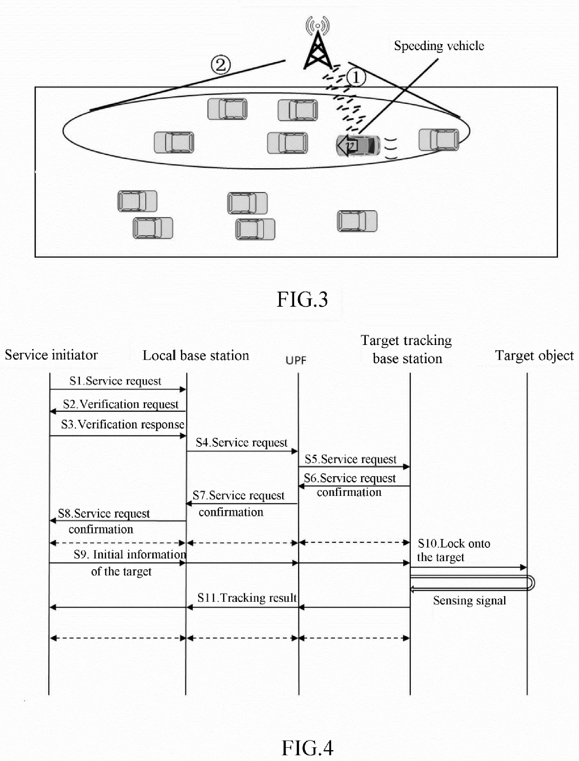

(1) In a case where a vehicle on the road is overspeed, travel of the vehicle is likely to cause rear-end collisions, crashes, run-over accidents or other dangers. In this case, the network side equipment 100 tracks the vehicle, acquires a position, a speed, or other information of the vehicle in real time, and broadcasts an alarm signal to remind nearby network-accessed vehicles and pedestrians to avoid the vehicle. FIG. 3 is a schematic diagram illustrating a target tracking broadcast warning performed by the network side equipment 100 according to an embodiment of the present disclosure. As shown by ① in FIG. 3, after an overspeed vehicle is detected through the scanning detection (the overspeed vehicle is represented by a vehicle icon marked with "v" in FIG. 3), the network side equipment 100 tracks the overspeed vehicle. As shown by ② in FIG. 3, the network side equipment 100 broadcasts a warning to network-accessed vehicles (shown within the ellipse in FIG. 3) in the vicinity of the overspeed vehicle.

(2) In a case where an intrusion object appears on the road, such as a tree on the roadside suddenly falling on an urban road, an unmanned aerial vehicle for aerial photography presenting at a low altitude over the road, or cattle or sheep entering a rural road, the network side equipment 100 tracks the intrusion object, obtains a position, a speed, and other information of the intrusion object in real time, and broadcasts a signal to provide an intrusion warning to nearby network-accessed vehicles and pedestrians.

(3) In a case where a traffic accident occurs on the road, a hit-and-run situation may arise. In this case, the network side equipment 100 tracks and positions the fleeing vehicle, acquires and provides a driving route of the felling vehicle to an accident handler for accountability.

(4) During a police pursuit operation, a suspect may often attempt to escape by driving a vehicle. In this case, the police initiate a target tracking request to the network side equipment 100, specifies the vehicle driven by the suspect, and requires the network side equipment 100 to track the vehicle in real-time. The police then efficiently intercept the vehicle driven by the suspect based on tracking information.

In the target tracking application scenario, the tracked target is usually non-connected, and thus the target tracking cannot be achieved by using communication-based positioning signals such as a positioning reference signal (PRS). Instead, target information is to be acquired actively by sending a sensing signal and receiving an echo. Typically, the network side equipment 100 first obtains an approximate range of the to-be-tracked target (for example, via scanning detection), locks onto the target based on initial information, and continuously sends the sensing signal to the target.

The target tracking may be initiated by the network side equipment 100, or the target tracking service request may be initiated by a service initiator authorized to initiate the target tracking task.

A possible service request process for the target tracking task is briefly described below.

In a case that the target tracking is initiated by the network side equipment 100, the network side equipment 100 may identify a target through periodic detection and actively initiate a target tracking service. For example, the process may include the following steps S1 to S3. In S1, the network side equipment 100 periodically scans targets within a detection range. In S2, the network side equipment 100 identifies a target that needs to be tracked (for example, an overspeed vehicle or a vehicle driving in the wrong direction on the road). In S3, the network side equipment 100 starts the target tracking.

FIG. 4 is an example illustrating a flowchart of requesting for a target tracking service by a service initiator. For example, the process may include the following steps S1 to S11.

In S1, a service initiator (also referred to as a third party) initiates a request for a target tracking service (also referred to as a service request or tracking request) to a local base station.

In S2, the local base station sends an authority authentication request to the service initiator to confirm that the service initiator is authorized to initiate the service. Situations where the service initiator is authorized to initiate the service include, for example, the police requesting for tracking on a vehicle of the suspect, a central management vehicle in a vehicle platoon requesting for tracking on a vehicle in the platoon, a roadside unit requesting for tracking on a vehicle on the road, and other reasonable requests for target tracking.

In S3, the service initiator sends an authority authentication response to the local base station.

In a case where the target is not within a coverage of the local base station, the process proceeds to S4, where the local base station reports the service request to a core network (for example, a user plane function UPF).

In S5, the core network issues the service request for the target tracking task to the base station in the area where the target is located (shown in FIG. 4 as a target tracking base station).

In S6, the target tracking base station sends a service request confirmation to the core network.

In S7, the core network sends a service request confirmation to the local base station.

In S8, the local base station sends a service request confirmation to the service initiator, that is, the local base station triggers the target tracking task. In a case where the target is within the coverage of the local base station, the process skips S4 to S7 and proceeds to S8, in which the target tracking service is triggered by the local base station. This flow is described with an example where the target is outside the coverage of the local base station.

In S9, the service initiator provides the target tracking base station with initial information of the target to assist to lock onto the target. The initial information may include a vehicle type of the target, an approximate range of the target, a moving direction of the target, an approximate speed of the target, and the like. In a case where the target tracking base station is able to schedule multimodal information, the initial information may include a vehicle color, a license plate number, and the like. The target tracking base station may schedule a multimodal sensor, such as a camera, an infrared measurement device, and the like, to cooperatively assist in locking onto the to-be-tracked target. Possible initial auxiliary information is summarized in Table 1.

Table 1

| Initial auxiliary information possibly provided by service initiator to target tracking base station | |
| --- | --- |
| Coarse-grained position information of target | Physical cell ID (PCI), Global cell ID (GCI), Global positioning system coordinates (GPS) |
| Fine-grained position information of target | Intra-cell coordinate information, position information relative to target tracking base station, position information relative to certain user or certain base station |
| Angle information of target | Spatial angle (horizontal angle, pitch angle) relative to target tracking base station, spatial angle (horizontal angle, pitch angle) relative to certain user or certain base station |
| Shape information of target | Vehicle type and size of target |
| Motion information of target | Moving speed, moving direction and trajectory of target |
| Optical information of target (base station adopts camera multimodal assistance) | Color, appearance, license plate number of target |

In S10, the target tracking base station locks onto the to-be-tracked target based on the initial information.

In S11, the target tracking base station performs target tracking and sends a tracking result to the service initiator.

The network side equipment 100 according to the embodiment of the present disclosure may be the aforementioned target tracking base station.

In a case where multiple base stations are capable of tracking the target, the core network may select a base station that is preferred in terms of location. For example, the core network may preferentially select a base station at a higher position, where a channel between such base station and the target is generally a line-of-sight path, achieving a better tracking performance. In a case of multiple target tracking tasks, the core network may select a base station that is preferred in terms of service load balancing. During the target tracking period, a roadside base station adjusts a beam direction based on the movement of the target to ensure that the target remains within a coverage of a sensing beam, continuously acquires the position, speed, and other information of the target based on an echo signal, and terminates the tracking service until the target is lost or actively removed.

The following describes modeling of a sensing channel in the present disclosure. A base station (network side equipment 100) is generally deployed high on the roadside, and site selection thereof ensures only few obstructions between the base station and a service road section. Therefore, it is assumed that a channel between the base station and a target on the road section is a line-of-sight dominated (LoS-dominated) channel. Assuming that the number of antennas of a transmitter is $N_T$, a transmit steering vector used is $f$ ($f$ is a $N_T \times 1$ vector), the number antennas of a receiver is $N_R$, and a receive steering vector used is $w$ ($w$ is a $N_R \times 1$ vector), for a point reflection model, an equivalent channel may be expressed as:

$$h(t) = A \exp(j2\pi f_D t)\, w^H b(\theta_r) a^H(\theta_t) f \delta(t - \tau)$$

In the equation, $t$ represents time, A (A is a complex number) represents an attenuation and reflection coefficient, $f_D = \frac{2v_r f_c}{c_0}$ represents a Doppler frequency shift, $v_r$ represents a radial relative movement speed between the radar and the target, $f_c$ represents a carrier frequency, $c_0$ represents the speed of light, $\tau = \frac{2R}{c_0}$ represents a path delay, $R$ represents a distance from the base station to the target, $a(\theta_t)$ represents a transmit steering vector with a departure angle of $\theta_t$, and $b(\theta_t)$ represents a receive steering vector with an arrival angle of $\theta_r$. The vectors may be expressed as follows:

$$a(\theta_t) = \left[ \exp\left( -j\frac{2\pi d_1^{(t)}}{\lambda} sin\,\theta_t \right), \exp\left( -j\frac{2\pi d_2^{(t)}}{\lambda} sin\,\theta_t \right), \dots, \exp\left( -j\frac{2\pi d_{N_T}^{(t)}}{\lambda} sin\,\theta_t \right) \right]$$

$$b(\theta_r) = \left[ \exp\left( -j\frac{2\pi d_1^{(r)}}{\lambda} sin\,\theta_r \right), \exp\left( -j\frac{2\pi d_2^{(r)}}{\lambda} sin\,\theta_r \right), \dots, \exp\left( -j\frac{2\pi d_{N_R}^{(r)}}{\lambda} sin\,\theta_r \right) \right]$$

Here, $\lambda$ represents a signal wavelength, $[d_1^{(t)}, d_2^{(t)}, \dots, d_{N_T}^{(t)}]$ represents a position offset of a transmit antenna array with respect to a zero-phase reference point, and $[d_1^{(r)}, d_2^{(r)}, \dots, d_{N_R}^{(r)}]$ represents a position offset of a receive antenna array with respect to a zero-phase reference point.

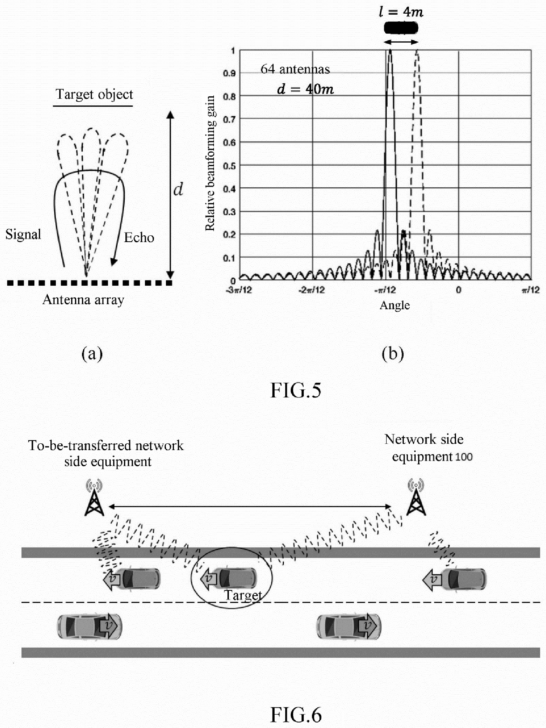

A tracking target of the base station is usually a road vehicle, and the road vehicle is generally modeled as a cuboid with a width of 1m, a height of 1m, and a length of 3 to 5m. For a base station equipped with a massive antenna array, the vehicle size is usually comparable to a beamwidth, and even multiple beams are required to realize a full coverage. Therefore, the target is not suitable to modeled as a point reflector. FIG. 5 is a schematic diagram illustrating a target tracking channel model. By way of example rather than limitation, in FIG. 5, the target is assumed to be a vehicle, a distance from the target to the antenna array (assumed to include 64 antennas) is $d$=40m, and the vehicle length $l$ is 4m. As shown in (a) of FIG. 5, for example, three beams are required to fully cover the vehicle. The two curves in (b) of FIG. 5 respectively illustrate a relative beam-forming gain (that is, beam directivity pattern) when the beams are aligned with both ends (head and tail) of the target. Considering a simplified two-dimensional model (that is, ignoring the pitch angle), the target is modeled as a line reflector in the present disclosure. The signal received by the receiver is a superposition of signals obtained from line reflection, while the time delay Doppler differences caused by the target size are ignored. An equivalent channel may be simplified and expressed as:

$$h(t) = \exp(j2\pi f_D t)\,\delta(t - \tau) \int_{x \in X_{target}} A(x) w^H b(\theta_r) a^H(\theta_t) f\, \mathrm{d}x$$

In the equation, $X_{target}$ represents a range within which the target is located; $\theta_r$, $\theta_t$ are obtained based on a differential element dx; and A(x) represents a reflection and attenuation coefficient of the differential element.

Taking a cross-cell target tracking service in the target tracking task as an example, since the target tracking service usually has a long duration and the target moves over a wide range, cross-cell tracking is an unavoidable issue. To ensure the continuity of the tracking service, it is desirable to maintain tracking on the target when the tracked target moves beyond the coverage of a cell, so as to avoid target loss. In order to accomplish the cross-cell tracking service, transfer of the tracking service is required. FIG. 6 is a diagram illustrating an example of transfer of target tracking according to an embodiment of the present disclosure. As shown in FIG. 6, when the target moves from cell 1 to cell 2 (cell 1 and cell 2 are not shown in FIG. 6), the base station performing the target tracking is switched from the network side equipment 100 (source base station) to a to-be-transferred network side equipment (target base station), and the target tracking is continued by the to-be-transferred network side equipment. In a case of performing transfer of the target tracking task, the to-be-transferred network side equipment is required to perform target re-identification (Target ReID).

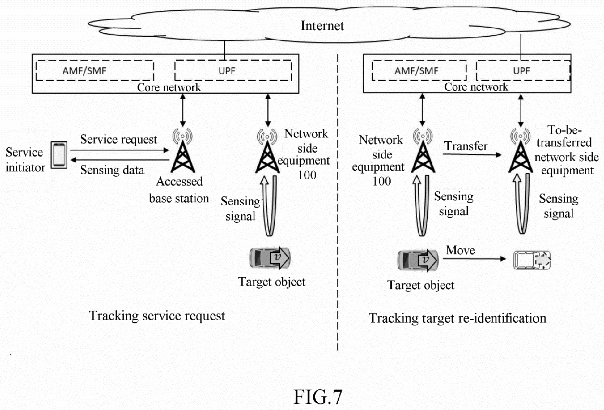

FIG. 7 is a schematic diagram illustrating an example of a target tracking service flow according to an embodiment of the present disclosure. A task initiator (service initiator) sends a target tracking service request to an accessed base station to which the task initiator is accessed. The accessed base station reports the service request to a user plane function (UPF). According to the cell in which the target is located, the UPF sends a service demand to a base station (network side equipment 100) whose sensing coverage covers the target. The base station (network side equipment 100) providing the target tracking service may be different from the base station of the cell where the service initiator is located, that is, service initiation is separated from service provision, and data is forwarded through the UPF. In the service transfer cross base stations, a transfer process is transparent to the service initiator and requires no participation of the service initiator. The network side equipment 100 and the to-be-transferred network side equipment may forward data through a direct interface or via an access and mobility management function (AMF). The to-be-transferred network side equipment is required to perform re-identification on the tracking target in order to ensure the continuity of the target tracking service. In FIG. 7, SMF represents a session management function.

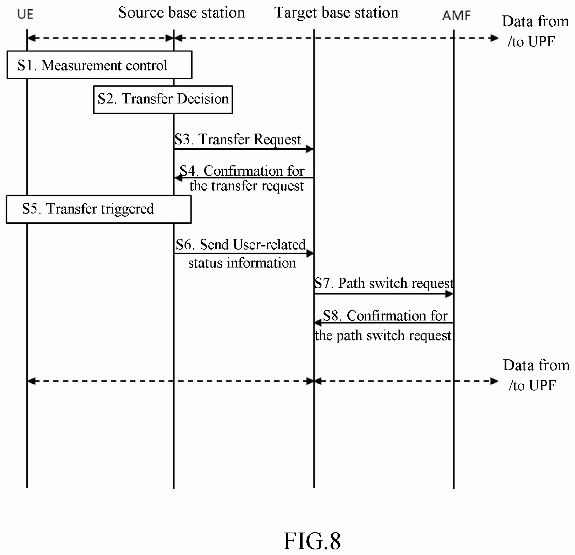

In the existing 5G NR standards, many processes for communication service transfer have been defined. However, it is difficult to directly applied these processes to transfer of the target tracking service. A main reason is that the tracked target in the target tracking service is usually non-cooperative with the base station and typically non-registered in the network. Therefore, it is impossible to perform target identification by sending signaling between the base station and the target or by using identification information such as a network address. FIG. 8 illustrates an example flow of communication service transfer in a conventional technology. FIG. 8 provides a schematic diagram of a signaling flow by taking the communication service transfer based on an Xn interface in the existing 5G NR as an example. In FIG. 8, it is assumed that two base stations in a city (a source base station and a target base station) are connected to the same access and mobility management function, an Xn interface exists between the two base stations to support direct data forwarding between base stations, and a user equipment (UE) is moving from the source base station to the target base station. The communication service transfer process may include steps S1 to S8. In S1, the accessed point of the user is the source base station, the source base station performs measurement control, and the users is allowed to transmit uplink data to and receive downlink data from the UPF via the source base station. In S2, as the user moves toward the target base station, the source base station is triggered to activate the communication service transfer based on signal measurement between the user and the source base station, that is, the transfer is determined. In S3, the source base station initiates a communication service transfer request to the target base station. In S4, the source base station receives a confirmation of the communication service transfer request from the target base station. In S5, the communication service transfer is triggered. In S6, the source base station transmits user-related state information to the target base station via the Xn interface. In S7, after receiving the user-related state information, the target base station sends a path switch request to the AMF to request switching of the uplink and downlink paths. In S8, the target base station receives the confirmation of the path switch request from the AMF, thereby completing the communication service transfer. In the above communication service transfer process, the user is typically in a network-registered connected state and cooperates with the base station. The target base station confirms the identity of the user based on information such as a user network address, user context information, a user access sequence number, and the like. However, in the target tracking service, the tracked target is usually non-registered and non-cooperative with respect to the base station. Therefore, identification cannot be performed through the above method, and the existing 5G NR communication service transfer process cannot be directly applied to the transfer of the target tracking service. That is, unlike the communication service transfer, transfer of the target tracking service requires that the target base station successfully identifies the to-be-tracked target before continuing the tracking service. Therefore, the existing 5G NR communication service transfer process cannot be directly used for the transfer of the target tracking service.

In the integrated sensing-communication system, during the transfer of the target tracking service, the tracked target is usually non-registered and non-cooperative with respect to the network side equipment 100. During the transfer of the target tracking service, the to-be-transferred network side equipment is required to perform a target re-identification process. The purpose of the target re-identification is to enable the to-be-transferred network side equipment to identify the tracking target to be transferred by the network side equipment 100 and ensure that the tracking target is identified correctly. That is, to perform transfer of the target tracking task, target re-identification is required for the to-be-transferred network side equipment.

According to the embodiment of the present disclosure, the to-be-transferred network side equipment identifies the to-be-tracked target object based on the target-related identification information provided by the network side equipment 100, and is able to continue the target tracking.

As an example, the processing unit 101 may be configured to stop, after receiving an instruction of identifying the target object from the to-be-transferred network side equipment, sending the identification information to the to-be-transferred network side equipment; verify, based on verification information that is received from the to-be-transferred network side equipment and used for verifying the target object, whether the to-be-transferred network side equipment succeeds in identifying the target object; and stop performing target tracking on the target object in a case of verifying, based on the verification information, that the to-be-transferred network side equipment succeeds in identifying the target object.

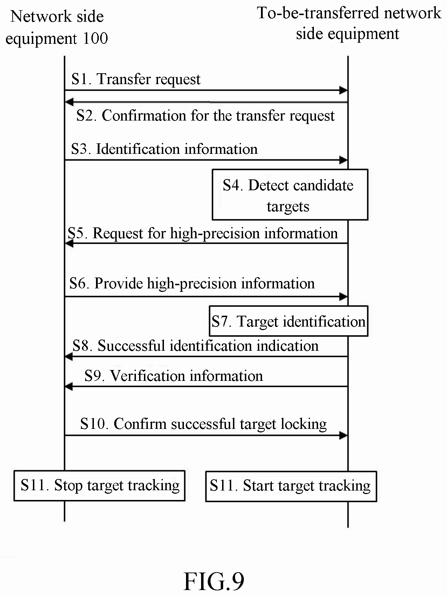

FIG. 9 is an example flowchart illustrating target re-identification according to an embodiment of the present disclosure.

In S1, the network side equipment 100 sends, to the to-be-transferred network side equipment, a request for transferring a target tracking service.

In S2, the network side equipment 100 receives, from the to-be-transferred network side equipment, a confirmation of the request for transferring the target tracking service.

In S3, the network side equipment 100 sends, to the to-be-transferred network side equipment, identification information for identifying the target object (for example, approximate position and/or speed of the target).

In S4, the to-be-transferred network side equipment performs target detection based on the obtained information, and detects possible tracking targets (that is, candidate targets). The process proceeds to S5 and S6 in a case where multiple possible tracking targets are detected, and proceeds to S7 in a case where only one possible tracking target is detected.

In S5, the to-be-transferred network side equipment requests for required high-precision information, such as a high-precision position and/or speed information, from the network side equipment 100 (that is, performs a high-precision target state information request), to determine the to-be-tracked target.

In S6, the network side equipment 100 provides the required high-precision information to the to-be-transferred network side equipment to assist the to-be-transferred network side equipment in target identification.

In S7, the to-be-transferred network side equipment successfully completes the target identification.

In S8, after the to-be-transferred network side equipment successfully completes the target identification, the network side equipment 100 receives a successful identification indication from the to-be-transferred network side equipment.

In S9, the network side equipment 100 stops sending target information, the network side equipment 100 receives verification information (for example, information such as the position and/or speed of the target) from the to-be-transferred network side equipment, and the network side equipment 100 verifies whether the to-be-transferred network side equipment successfully identifies the target object (that is, target verification is performed by the network side equipment 100).

In S10, the network side equipment 100 compares based on the received verification information to confirm that the to-be-transferred network side equipment successfully locks onto the target.

The high-precision information required in S5 to S6, such as high-precision positioning and speed measurement information, may be obtained through high-precision target tracking described below (for example, the precise positioning information described in the high-precision target tracking). In a case where the network side equipment 100 determines, in S10, that the to-be-transferred network side equipment misidentifies the target, the network side equipment 100 sends an instruction for re-performing S5 to S10.

In S11, the network side equipment 100 stops the target tracking, and the to-be-transferred network side equipment starts the target tracking.

As an example, the processing unit 101 may be configured to transfer the target tracking task based on an Xn interface.

The Xn interface serves as a direct channel connecting base stations, and supports direct information transmission between base stations. When no Xn interface exists between two base stations (for example, when the two base stations are in different provinces), information forwarding may be performed via an N2 interface between the base stations and the AMF.

As an example, the processing unit 101 may be configured to, through the Xn interface: send, to the to-be-transferred network side equipment, a request for transferring the target tracking task, and receive, from the to-be-transferred network side equipment, confirmation for the request; send the identification information to the to-be-transferred network side equipment; and receive verification information for verifying the target object from the to-be-transferred network side equipment.

Since the to-be-tracked target is non-registered with respect to the network side equipment 100, and service initiation is separated from service execution, the service transfer process requires no participation of the target. Compared with the 5G NR communication service transfer process, information forwarding of the target object (for example, sequence number (SN) status transfer) is amended to be target re-identification. After completing target re-identification, the to-be-transferred network side equipment sends (receives) uplink (downlink) data to (from) the UPF.

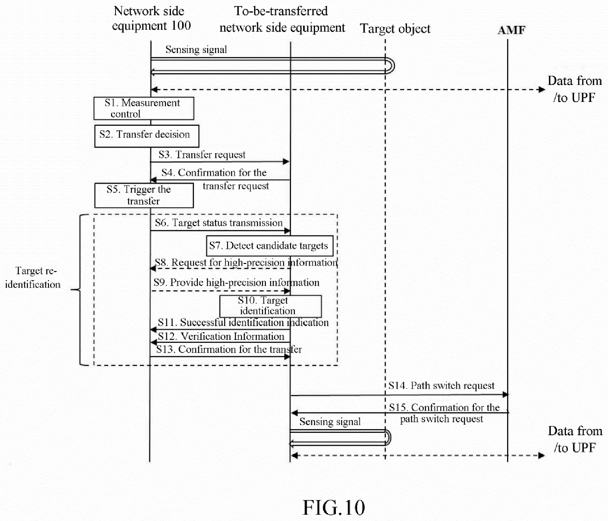

FIG. 10 is an example flowchart illustrating transfer of a target tracking task based on an Xn interface according to an embodiment of the present disclosure.

In S1, the network side equipment 100 performs measurement control.

In S2, the network side equipment 100 determines to transfer the target tracking task.

In S3, the network side equipment 100 sends, to the to-be-transferred network side equipment, a request for transferring the target tracking task.

In S4, the network side equipment 100 receives, from the to-be-transferred network side equipment, a confirmation for the request for transferring the target tracking task.

In S5, the network side equipment 100 triggers transfer of the target tracking task.

In S6, the network side equipment 100 sends identification information (for example, approximate position and/or speed of the target) for identifying the target object to the to-be-transferred network side equipment via the Xn interface, that is, sends a target state.

In S7, the to-be-transferred network side equipment performs target detection based on the obtained information, and detects possible tracking targets (that is, candidate targets). The process proceeds to S8 and S9 in a case where multiple possible tracking targets are detected, and proceeds to S10 in a case where only one possible tracking target is detected.

In S8, the to-be-transferred network side equipment requests for required high-precision information, such as the high-precision position and/or speed information, from the network side equipment 100 (that is, performs a high-precision target state information request), to determine the to-be-tracked target.

In S9, the network side equipment 100 provides the required high-precision information to the to-be-transferred network side equipment to assist the to-be-transferred network side equipment in target identification.

In S10, the to-be-transferred network side equipment successfully completes the target identification.

In S11, after the to-be-transferred network side equipment successfully completes the target identification, the network side equipment 100 receives a successful identification indication from the to-be-transferred network side equipment.

In S12, the to-be-transferred network side equipment sends verification information for verifying the target object (for example, target state information of the target object) to the network side equipment 100 to request for verification.

In S13, the network side equipment 100 completes the verification, confirms that the to-be-transferred network side equipment correctly identifies the tracking target, and sends a confirmation of transfer of the target tracking task to the to-be-transferred network side equipment.

In S14, the to-be-transferred network side equipment sends a path switching request to the AMF to request switching of uplink and downlink paths related to the target tracking.

In S15, the to-be-transferred network side equipment receives confirmation of the path switching request from the AMF, and completes modification and connection of the uplink and downlink paths related to the target tracking.

As an example, the processing unit 101 may be configured to transfer the target tracking task based on an N2 interface.

As an example, the processing unit 101 may be configured to: send, to the to-be-transferred network side equipment through an AMF, a request for transferring the target tracking task, and receive, from the to-be-transferred network side equipment through the AMF, confirmation for the request; send the identification information to the to-be-transferred network side equipment through a User Plane Function UPF; and receive verification information for verifying the target object from the to-be-transferred network side equipment through the UPF.

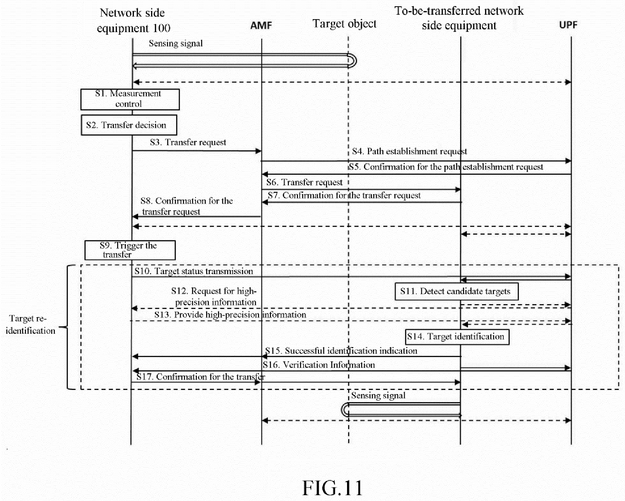

FIG. 11 is an example flowchart illustrating transfer of a target tracking task based on an N2 interface according to an embodiment of the present disclosure.

In S1, the network side equipment 100 performs measurement control.

In S2, the network side equipment 100 determines to transfer the target tracking task.

In S3, the network side equipment 100 sends, to the AMF, a request for transferring the target tracking task.

In S4, the AMF sends a path establishment request to the UPF.

In S5, the AMF receives a confirmation for the path establishment request from the UPF.

In S6, the AMF sends, to the to-be-transferred network side equipment, a request for transferring the target tracking task.

In S7, the AMF receives, from the to-be-transferred network side equipment, a confirmation for the request for transferring the target tracking task.

In S8, the network side equipment 100 receives, from the AMF, a confirmation for the request for transferring the target tracking task.

In S9, the network side equipment 100 triggers transfer of the target tracking task.

In S10, the network side equipment 100 sends identification information (for example, approximate position and/or speed of the target) for identifying the target object to the UPF, that is, sends a target state.

In S11, the to-be-transferred network side equipment performs target detection based on the obtained information, and detects possible tracking targets (that is, candidate targets). The process proceeds to S12 and S13 in a case where multiple possible tracking targets are detected, and proceeds to S14 in a case where only one possible tracking target is detected.

In S12, the to-be-transferred network side equipment requests, through the UPF, for required high-precision information, such as high-precision position and/or speed information, from the network side equipment 100 (that is, performs a high-precision target state information request), to determine a to-be-tracked target.

In S13, the network side equipment 100 provides, through the UPF, the required high-precision information to the to-be-transferred network side equipment to assist the to-be-transferred network side equipment in target identification.

In S14, the to-be-transferred network side equipment successfully completes the target identification.

In S15, after the to-be-transferred network side equipment successfully completes the target identification, the network side equipment 100 receives, through the AMF, a successful identification indication from the to-be-transferred network side equipment.

In S16, the to-be-transferred network side equipment sends, through the UPF, verification information for verifying the target object (for example, target state information of the target object) to the network side equipment 100 to request for verification.

In S17, the network side equipment 100 completes the verification, confirms that the to-be-transferred network side equipment correctly identifies the tracking target, and sends, through the AMF, a confirmation of transfer of the target tracking task to the to-be-transferred network side equipment.

In the end, the to-be-transferred network side equipment completes modification and connection of uplink and downlink paths related to the target tracking.

As can be seen from the process shown in FIG. 11, since no Xn interface exists between the network side equipment 100 and the to-be-transferred network side equipment, data of a request type is generally forwarded via the AMF, and the AMF serves as an intermediate node to complete modification of uplink and downlink paths related to target tracking. Data required in S10 to S17 for target re-identification may be forwarded through the UPF to accomplish the target re-identification.

As an example, the processing unit 101 may be configured to trigger transfer of the target tracking task based on an event indicating that the target object is to move from the sensing coverage of the network side equipment 100 into the sensing coverage of the to-be-transferred network side equipment. As an example, the transfer of the target tracking task is triggered by measurement performed by the network side equipment 100, where a triggering event indicates that the target object is moving from the sensing coverage of the network side equipment 100 toward the sensing coverage of the to-be-transferred network side equipment.

As an example, the event includes that the target object is detected, by the network side equipment 100 based on positioning information of the target object, to move out of the sensing coverage of the network side equipment 100.

For example, the transfer is triggered by the target moving across regions based on a pre-defined sensing coverage (tracking range). For instance, the network side equipment 100 pre-defines a hexagonal cellular cell as the tracking range. When it is detected, based on positioning information of the target object, that the target object is to move out of the tracking range of the network side equipment 100, the transfer of the target tracking task is triggered. The network side equipment 100 transfers the target tracking task to the to-be-transferred network side equipment where the target object is to enter a sensing coverage of the to-be-transferred network side equipment, so that the tracking is continued.

As an example, the event includes that an amplitude of an echo received by the network side equipment 100 from the target object remains below a predetermined threshold for a predetermined duration and continues to decrease.

For example, the transfer is triggered based on a measured variation of echo strength. For instance, the network side equipment 100 continuously receives echoes from the target for target tracking. In a case where the echo strength remains below a predetermined threshold and continues to decrease, it is determined that the target is to be transferred to and tracked by the to-be-transferred network side equipment where the target is to enter the sensing coverage of the to-be-transferred network side equipment tracking. Hence, transfer of the target tracking task is triggered, and the network side equipment 100 transfers the target tracking task to the to-be-transferred network side equipment to continue tracking.

To obtain high-precision position and/or speed information of the target object, a method for high-precision target tracking is further provided according to the present disclosure. The method for high-precision target tracking may be used independently or in combination with the above-described transfer of a target tracking task. A basic idea of the method for high-precision target tracking is to adjust included angles of multiple beams and/or direction of a central axis of the multiple beams, so that each beam points to the edge of the target object. During capture of the tracking target, the network side equipment 100 obtains approximate position information of a to-be-tracked target through scanning detection or prior notification from a service initiator, and the network side equipment 100 issues beams toward the target to lock onto the target.

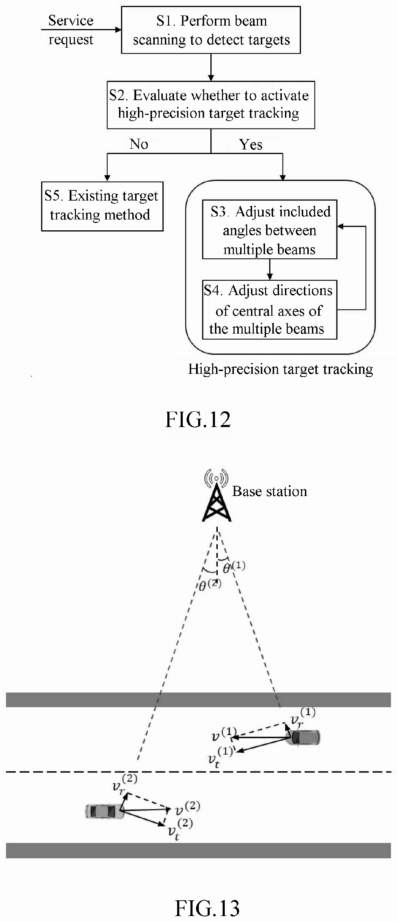

FIG. 12 is an example flowchart illustrating target tracking according to an embodiment of the present disclosure. In S1, upon receiving a request for a target tracking service, the network side equipment 100 performs beam scanning to detect a sensing range (sensing domain) to detect a to-be-tracked target. In S2, after the target is successfully detected, the network side equipment 100 may evaluate whether to activate high-precision target tracking based on a size of the target, a required tracking accuracy, and other information, for example. In a case where the high-precision target tracking is activated, the network side equipment 100 may execute S3 and/or S4 to adjust the included angles between multiple beams and/or the direction of the central axis of the multiple beam (for example, in a case where S3 and S4 are executed alternately, the order of S3 and S4 may be inversed, and S3 and S4 may be executed alternately in a repeating manner to ensure high-precision tracking on the target), thereby ensuring that the multiple beams are aligned with the edge of the target to obtain high-precision positioning information of the target. In S3, the included angles between multiple beams are adjusted, and in S4, the direction of the central axis of the multiple beams is adjusted. Furthermore, based on the high-precision positioning information, the network side equipment 100 is able to estimate high-precision speed information of the target. In a case where the high-precision target tracking is not required, the process proceeds to S5, in which the target object is tracked through the conventional target tracking method.

As an example, the processing unit 101 may be configured to, during target tracking on the target object: send sensing signals to the target object via multiple beams, receive echo signals corresponding to the sensing signals from the target object via the multiple beams, and adaptively adjust the included angles between the multiple beams and/or the central axis of the multiple beams based on a comparison of amplitudes of the echo signals corresponding to the multiple beams, to obtain precise positioning information of the target object. The processing unit 101 may be configured to, after continuous precise positioning information (high-precision position information) of the target object is obtained, calculate a speed of the target object based on displacement information of the target object within a time interval, thereby obtaining high-precision positioning and speed measurement information.

In a sensing-communication application of roadside base stations, target tracking on a road vehicle or pedestrian is a common service. Typically, the service requires continuously obtaining a position, a speed and other information of a certain target via sensing signals. In a conventional technology, a Doppler-based speed measurement can only measure a radial speed of a target relative to a signal source and cannot obtain tangential speed information. In an application for roadside base stations, speed of a target along the road (with a principle component being a tangential speed) is more important. With the conventional Doppler-based speed measurement, it is impossible to obtain a high-precision speed measurement result, and it is difficult to perform target re-identification during cross-base-station service transfer. Therefore, the Doppler-based speed measurement is inappropriate as a speed measurement solution for a roadside base station. In conventional technologies, a first approach is to perform positioning using single-beam angle information combined with ranging information, and estimate a target speed by measuring a moving distance of the target in a positioning internal. However, the positioning and speed measurement based on single-beam angle information combined with ranging information suffers from low precision in positioning and thereby low precision in speed measurement, and the precision is greatly affected by the beamwidth. A second approach is to determine a geometric relationship by measuring an included angle formed between a target and a base station, and derive an along-road speed from a radial speed based on the geometric relationship. However, estimating the along-road speed of the target from the radial speed based on the geometric relationship is greatly affected by an angle estimation error, and the estimated speed may be subject to a large error when the target velocity is not strictly along the road. Moreover, the angle measurement error may lead to a large speed estimation error, and the second approach requires a strong assumption that the target velocity is strictly along the road direction.

FIG. 13 is a schematic diagram illustrating a speed measurement solution based on geometric correction according to a conventional technology. As shown in FIG. 13, it is assumed that a vehicle velocity is strictly along a road direction, an actual speed of the vehicle is v, a radial speed measured by a base station based on Doppler effect is $v_r$, a tangential speed is $v_t$, and the base station estimates, through beam-based angle estimation, that an included angle between the vehicle and an axis line of the base station is $\theta$. Hence, an actual speed of the vehicle is $v = \dfrac{v_r}{\sin\theta}$. In FIG. 13, the symbols v, $v_r$, $v_t$ and $\theta$ with a superscript (1) or (2) represent parameters of the vehicle at two different positions.

With the geometric correction of speed, the along-road speed of the vehicle can be derived from the radial speed, but a serious estimation error is caused. First, the solution assumes that the vehicle strictly moves along the road direction, while the vehicle may actually change lanes or have other behaviors. When a lane change, U-turn or another behavior is performed by the vehicle, the estimated speed obtained from this solution may exhibit a large error, which may cause the base station to misjudge an emergency situation. Secondly, this solution heavily relies on the accuracy of angle estimation. If the estimated angle is $\hat{\theta}$ with an estimation error $\Delta\theta = \hat{\theta} - \theta$, the speed estimation error may be expressed as

$$\Delta v = v_r \left( \frac{1}{\sin\hat{\theta}} - \frac{1}{\sin\theta} \right) \approx -v_r \frac{\Delta\theta \cos\theta}{\sin^2\theta}.$$ When the angle $\theta$ is small, the estimation error becomes significantly large.

Compared with the approach 1 in the conventional technology, the high-precision target tracking method according to the embodiment of the present disclosure achieves high-precision positioning, and the precision is slightly influenced by beamwidth. Compared with approach 2 in the conventional technology, high-precision target tracking method according to the embodiment of the present disclosure requires no strong assumption of the target velocity, and propagation of the angle measurement error does not result in a large speed estimation error. In other words, with the high-precision target tracking method according to the embodiment of the present disclosure, high-precision positioning and speed measurement can be realized, low accuracy in beam angle measurement is required, and the tracking beam can be adaptively adjusted to track the target.

As an example, the processing unit 101 may be configured to send precise positioning information, as identification information, to the to-be-transferred network side equipment, or the processing unit 101 may be configured to, upon receiving a request for precise information for identifying the target object from the to-be-transferred network side equipment, send the precise positioning information as the precise information to the to-be-transferred network side equipment. For example, the precise positioning information is information of the target object obtained by adaptively adjusting the included angles between multiple beams and/or the central axis of multiple beams as described above. The precise positioning information assists the to-be-transferred network side equipment in more accurately identifying the target object.

As an example, the number of the multiple beams may be determined based on a size of the target object and/or a precision requirement of the target tracking task.

As an example, the processing unit 101 may be configured to acquire the size of the target object for initializing included angles between multiple beams.

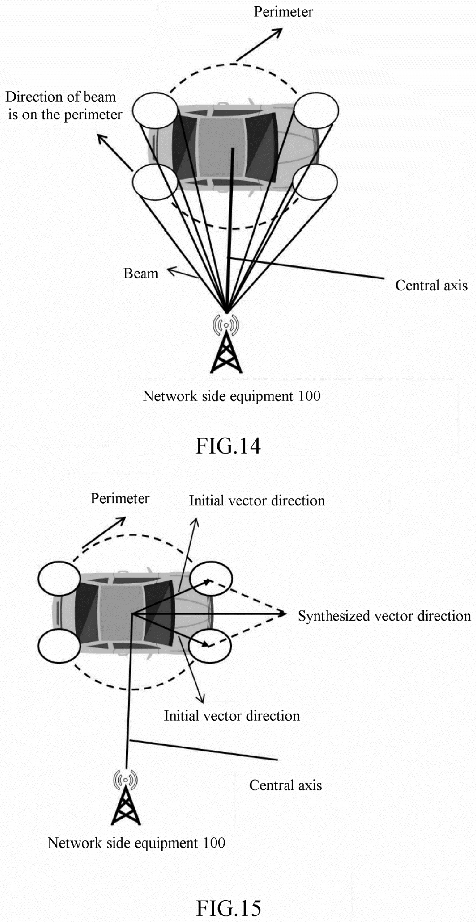

As an example, the processing unit 101 may be configured to: determine a central axis of the multiple beams that aligns with a center of the target object, construct a graphic enclosing the target object with the central axis as a center, and perform three-dimensional beamforming to form the multiple beams respectively pointing to a perimeter of the graphic. For example, in the high-precision target tracking method according to an embodiment of the present disclosure, it is assumed that a transmitter uses a planar antenna array for the three-dimensional beamforming and tracks the target with multiple beams (multi-beam target tracking). By way of example rather than limitation, the graphic may be a circular graphic or elliptical graphic. Those skilled in the art may envisage other possible forms of the graphic, which is not further described here. For simplicity, the graphic is illustrated as a circular shape in FIG. 14 and FIG. 15.

FIG. 14 is a schematic diagram illustrating an example of multi-beam target tracking according to an embodiment of the present disclosure. As shown in FIG. 14, the transmitter first determines a central axis roughly aligned with the target and constructs a graphic of an appropriate size with the central axis as a center. The transmitter of the network side equipment 100 forms multiple beams. The multiple beams may be generated through antenna array structure beamforming (the beams may be formed and transmitted by using the antenna array structure), may be generated separately by using multiple radio frequency chains, or may be generated by generating multiple single beams separately and rapidly switching among the single beams to form equivalent multiple beams, so that a multi-beam measurement result is obtained. The multiple beams all point to the perimeter of the graphic, attempting to lock onto the target.

As an example, the processing unit 101 may be configured to expand the perimeter and cause the multiple beams to respectively point to the perimeter to adjust the included angles between the multiple beams, in response to a predetermined number of beams among the multiple beams satisfying the following condition: for each beam among the predetermined number of beams, a magnitude of an echo signal corresponding to the beam being greater than or equal to a predetermined magnitude threshold, and a slope of a variation curve representing the magnitude of the echo signal corresponding to the beam relative to an included angle between the beam and the central axis being less than a predetermined slope threshold. For example, in a case where the number of beams whose echo strengths are greater than or equal to the predetermined magnitude threshold is greater than the predetermined number and for each of the beams, the slope of the variation curve representing the strength of the echo signal corresponding to the beam relative to the included angle between the beam and the central axis is less than the predetermined slope threshold, it is determined that the multiple beams are directed at a middle portion of the target. In this case, the perimeter is expanded and the multiple beams are controlled to point to the perimeter.

As an example, the processing unit 101 may be configured to reduce the perimeter and cause the multiple beams to respectively point to the perimeter to adjust the included angles between the multiple beams, in response to a predetermined number of beams among the multiple beams satisfying the following condition: for each beam among the predetermined number of beams, a magnitude of an echo signal corresponding to the beam being less than a predetermined magnitude threshold, and a slope of a variation curve representing the magnitude of the echo signal corresponding to the beam relative to an included angle between the beam and the central axis being less than a predetermined slope threshold. For example, in a case where the number of beams whose echo strengths are less than the predetermined magnitude threshold is greater than the predetermined number and for each of the beams, the slope of the variation curve representing the strength of the echo signal corresponding to the beam relative to the included angle between the beam and the central axis is less than the predetermined slope threshold, it is determined that the multiple beams are directed to an outer portion of the target. In this case, the perimeter is reduced, and the multiple beams are controlled to point to the perimeter.

As an example, the processing unit 101 may be configured to determine that the multiple beams are respectively aligned with edges of the target object, in response to a predetermined number of beams among the multiple beams satisfying the following condition: for each beam among the predetermined number of beams, a magnitude of an echo signal corresponding to the beam falling within a predetermined amplitude range, and a slope of a variation curve representing the magnitude of the echo signal corresponding to the beam relative to an included angle between the beam and the central axis being greater than or equal to a predetermined slope threshold. For example, in a case where the number of beams whose echo strengths are within the predetermined amplitude range is greater than the predetermined number and for each of the beams, the slope of the variation curve representing the magnitude of the echo signal corresponding to the beam relative to the included angle between the beam and the central axis is greater than or equal to the predetermined slope threshold, it is determined that the multiple beams are successfully aligned with the edges of the target.

As an example, the processing unit 101 may be configured to, in response to a difference between magnitudes of the echo signals respectively corresponding to the multiple beams exceeding a predetermined amplitude difference threshold, adjust the central axis toward a direction of a quadrant or toward a direction of a beam corresponding to a maximum echo signal magnitude, until the difference between magnitudes of the echo signals respectively corresponding to the multiple beams is less than the predetermined difference threshold. The quadrant includes more than a predetermined number of beams corresponding to echo signals whose magnitudes are greater than or equal to a predetermined beam amplitude threshold. After the adjustment, the central axis is aligned with the center of the target, and in combination with the adjustment of the included angles between the multiple beams, the pointing directions of the multiple beams all fall on the perimeter of the graphic.

In a case where the central axis is not aligned with the center of the target, merely adjusting the included angles between the multiple beams may result in a situation where some beams are directed to the middle portion of the target while other beams are shifted outside the target. Therefore, it is necessary to adjust the direction of the central axis of the multiple beams. In a case where the central axis of the multiple beams is not aligned with the target center, the echo strengths of the beams may differ. The direction of the central axis may be adjusted toward a beam with a larger echo strength according to the echo strengths, until the echo strengths of the beams are approximately equal to each other. FIG. 15 is a schematic diagram illustrating an example of adjusting a central axis of multiple beams according to an embodiment of the present disclosure. As shown in FIG. 15, in a case where multiple beams have strong echoes, direction of each beam (that is, initial vector direction of connection from the central axis to the beam) is obtained, the vector directions are then connected head-to-tail (that is, according to the parallelogram rule) to obtain a resultant vector direction, and the central axis is adjusted toward the resultant vector direction.

With an example where the multiple beams are two beams, the adjustment of the included angle between the beams and/or the central axis is described below, that is, a dual-beam target tracking is described. In the dual-beam target tracking, the two beams are respectively directed to a head and a tail of a target, and the included angle between the two beams and the direction of the axis may be adaptively adjusted by comparing amplitudes of echoes returned from the head and the tail of the target, thereby achieving high-precision target tracking. Further, a speed of the target is estimated based on the high-precision position information obtained continuously.

During the capture of the tracking target described above, the network side equipment 100 is required to determine the to-be-tracked target by performing scanning detection or based on initial information provided by the service initiator. The initial information of the target may include an approximate position or a speed range of the to-be-tracked target, and a relative position, a relative distance, or a relative speed of the to-be-tracked target with respect to another reference object, and the like. To determine the to-be-tracked target, an approximate size of the to-be-tracked target is to be acquired to initialize an included angel between the two beams. After the target is captured, the network side equipment 100 transmits the two beams having a certain included angle to the target. The two beams may be formed and simultaneously transmitted through an array structure, may be generated separately by multiple radio frequency chains, or may be generated by switching between two beams at a high frequency to form equivalent two beams. The network side equipment 100 may adjust the included angle between the two beams by receiving strengths of echoes of the two beams, to cause the opening included angle between the two beams to be equal to an opening angle between the tracking target and the network side equipment 100 as much as possible, thereby enabling the two beams to respectively cover the head and the tail of the target and facilitating reduction of tracking errors.

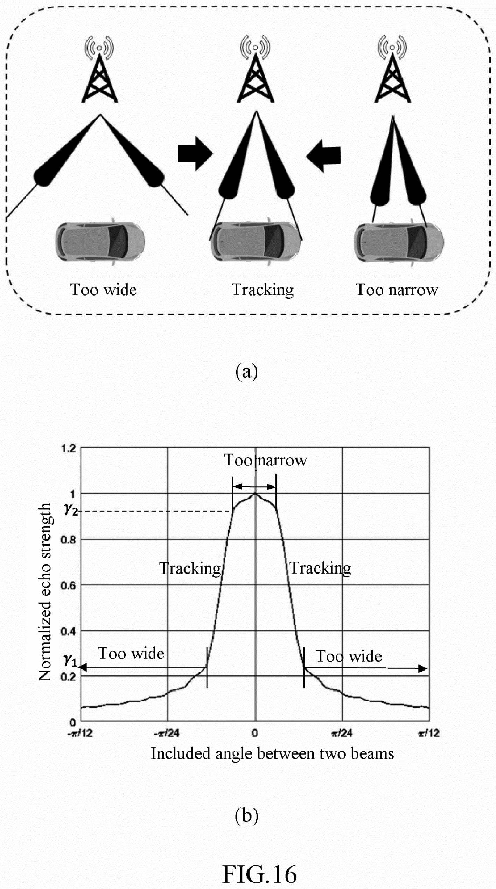

FIG. 16 is a schematic diagram illustrating an example of adaptive adjustment of an included angle between two beams according to an embodiment of the present disclosure. In FIG. 16, a central direction of the tracking target is determined as a 0° axial direction, and an echo strength corresponding to one beam of the two beams obtained by changing an included angle (angle degree) between the two beams is shown. The network side equipment 100 presets a low threshold $\gamma_1$ and a high threshold $\gamma_2$. Based on the relationship between the echo strength, the low threshold, and the high threshold, the echo strength s may be classified into three ranges ($s < \gamma_1, \gamma_1 < s < \gamma_2, s > \gamma_2$). Referring to FIG. 16, a curve representing the relationship between the echo strength and the angle may be generally divided into the following three segments. In the vicinity of 0° (labeled by "too narrow" in (a) and (b) of FIG. 16, that is, $s > \gamma_2$), the echo strength is high and the slope of the curve is small, indicating that the beams are directed to a middle portion of the target, and therefore the beams should be adjusted toward the outside of the target. In the portion where the included angle between the two beams is excessively large (labeled by "too wide" in (a) and (b) of FIG. 16, that is, $s < \gamma_1$), the echo strength is low and the slope of the curve is small, indicating that the beams are directed to the outside of the target, and therefore the beams should be adjusted toward the inside of the target. In the intermediate portion (labeled by "tracking" in (a) and (b) of FIG. 16, that is, $\gamma_1 < s < \gamma_2$), the echo strength is moderate and the slope of the curve is large, indicating that the beams are successfully aligned with the head or the tail of the target.

For example, the network side equipment 100 compares the echo signal strengths si, and $s_2$ of the two beams with the preset threshold $\gamma_1$, and $\gamma_2$. In a case where the echo strengths of the two beams are both greater than or equal to the high threshold $\gamma_2$, it indicates that the beams are directed to the middle portion of the target, and the included angle between the two beams should be increased. In a case where the echo strengths are both less than the low threshold $\gamma_1$, it indicates that the beams are directed to the outer side of the target, and the included angle between the two beams should be reduced. In a case where the echo strengths are both greater than or equal to the low threshold $\gamma_1$ and less than the high threshold $\gamma_2$, it indicates that the beams are successfully aligned with the head/tail of the target, which represents a normal tracking state. In this way, the included angle between the two beams is corresponded to the size of the target, and thereby the two beams are aligned with the head and tail of the target, respectively.

In a case where the central axis of the two beams is not aligned with the center of the target, merely adjusting the included angle between the two beams may cause a situation where one of the beams is directed to the middle portion of the target while the other beam is shifted outside the target. Therefore, it is necessary to adjust the direction of the central axis of the two beams.

For example, the included angle between the two beams is adjusted in a case where the echo signal strengths of the two beams fall within a same interval; and the direction of the central axis of the two beams is adjusted in a case where the echo signal strengths of the two beams fall into different intervals.

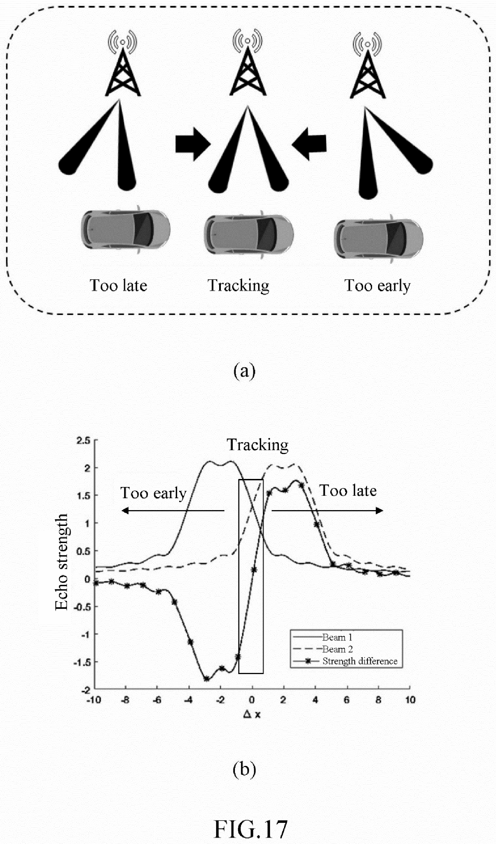

FIG. 17 is a schematic diagram illustrating an example of adaptive adjustment of direction of a central axis of two beams according to an embodiment of the present disclosure. Labels "Too late" in (a) and (b) of FIG. 17 indicates that it is too late for the beams to track the target, causing the beams to point to a left side of the target. Labels "Too early" in (a) and (b) of FIG. 17 indicates that it is too early for the beams to track the target, causing the beams to point to a right side of the target. Labels "Tracking" in (a) and (b) of FIG. 17 indicates that the two beams point to the head and tail of the target, respectively. As shown in (b) of FIG. 17, when the central axis of the two beams is not aligned with the central axis of the target, the echo strengths of the two beams (beam 1 and beam 2) are different from each other. Within the range labeled "Tracking" in (b) of FIG. 17, an offset ($\Delta x$) of the central axis of the two beams from the central axis of the target is approximately linearly related to the difference between echo strengths of the two beams. Based on the relationship between the offset and the difference between echo strengths, the network side equipment 100 adjusts the direction of the central axis of the two beams toward the beam with stronger echo strength until the echo strengths of the two beams are approximately equal to each other.

For example, the network side equipment 100 compares the difference $s_1 - s_2$ between the echo signal strengths of the two beams with a preset threshold $\gamma_3$ (assuming that $s_1$ represents the echo strength of beam 1, and $s_2$ represents the echo strength of beam 2). A relation $s_1 - s_2 > \gamma_3$ indicates that the echo strength of beam 1 is much greater than the echo strength of beam 2, and the central axis of the two beams should be rotated toward beam 1. A relationship $s_1 - s_2 < -\gamma_3$ indicates that the echo strength of beam 2 is much greater than the echo strength of beam 1, and the central axis of the two beams should be rotated toward beam 2. This adjustment continues until the echo strengths of the two beams are approximately equal to each other within an error tolerance. After the adjustment, the central axis of the two beams can be aligned with the center of the target, and in combination with the adjustment of the included angle of the two beams, the two beams can be aligned with the head and tail of the target, respectively.

An example diagram illustrating a simulation result of the target tracking with two beams according to an embodiment of the present disclosure is given below. In the simulation, the transmitting antenna is configured with $N_T$=64, a linear antenna array with half-wavelength spacing is applied, a signal-to-noise ratio is set varying from -10dB to 20dB, a target length is set to $l$=4m, a distance from the network side equipment 100 to the target is set to d=40m, and a sensing period is set to 1s.

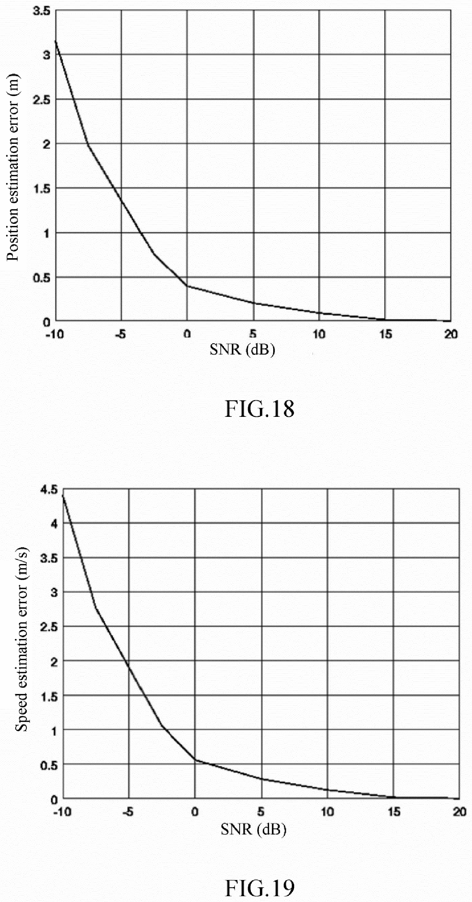

FIG. 18 is an example diagram illustrating positioning estimation errors at different signal-to-noise ratios in target tracking with two beams according to an embodiment of the present disclosure. As can be seen from FIG. 18, in a case where the SNR at the receiver satisfies SNR>0dB, the positioning estimation error is less than 0.5m, indicating that the target tracking with two beams meets a requirement for high-precision positioning.

FIG. 19 is an example diagram illustrating speed estimation errors at different signal-to-noise ratios in target tracking with two beams according to an embodiment of the present disclosure. As can be seen from FIG. 19, in a case where the SNR at the receiver satisfies SNR>0dB, the speed estimation error is less than 0.6m/s, indicating that the high-precision positioning by the target tracking with two beams leads to a high-precision speed estimation, so that the requirement for high-precision speed measurement is met.

To enhance the robustness of target tracking and obtain more accurate target tracking information, the network side equipment 100 may perform cooperative sensing (cooperative measurement) with other sensing-capable devices (also referred to as sensing apparatuses or auxiliary sensing nodes, such as other networked vehicles or users having sensing capabilities) to perform target tracking on the target object.

As an example, the processing unit 101 may be configured to receive, from sensing apparatuses having sensing function, sensing information obtained by sensing the object target, and perform target tracking on the target object based on the sensing information.

As an example, the processing unit 101 may be configured to send, through broadcasting, a sensing request for sensing the target object to neighboring apparatuses located within a predetermined range of the network side equipment 100, and select, based on an orientation of the target object, the sensing apparatuses from neighboring apparatuses that return confirmations for the sensing request.

After obtaining the sensing information from the auxiliary sensing nodes, the network side equipment 100 may utilize the information to achieve improved sensing performance on the target.

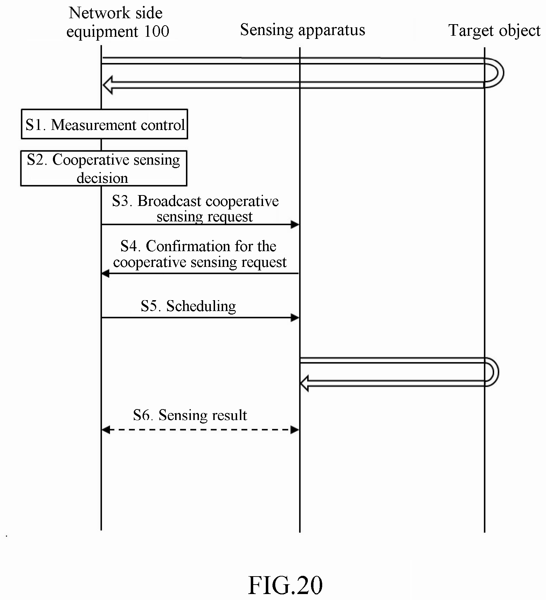

FIG. 20 is an example flowchart illustrating cooperative sensing according to an embodiment of the present disclosure.

In S1, the network side equipment 100 performs measurement control.

In S2, the network side equipment 100 determines to perform cooperative sensing. For example, the network side equipment 100 triggers a cooperative measurement request due to a degraded current tracking quality. A triggering event may include that, for example, the tracking target is shaded or predicted to be shaded, and a current measurement result has excessive uncertainty such that the tracking accuracy fails to meet a required level.

In S3, the network side equipment 100 broadcasts a cooperative sensing request.

In S4, the network side equipment 100 receives confirmations for the cooperative sensing request from neighboring sensing-capable apparatuses. For example, the network side equipment 100 selects, based on orientation of a to-be-sensed target, sensing apparatuses from neighboring apparatuses that have returned confirmations for the sensing request. For example, the sensing apparatuses near the target are selected.

In S5, the network side equipment 100 schedules the sensing apparatuses via RRC, for example, and requests the sensing apparatuses to perform auxiliary sensing on the target object.

In S6, the network side equipment 100 obtains sensing results from the sensing apparatuses.

For clarity, the above description of target tracking, transfer of a target tracking task, and cooperative sensing is made with an example in which the target object is a road vehicle. In practice, the target tracking, the transfer of a target tracking task, and the cooperative sensing may be applied for tracking a pedestrian on the road, tracking an unmanned aerial vehicle in the sky, or other scenarios, and the type of the tracking target is not limited.

As an example, the target object is a group of wild animals, and the positioning information of the target object obtained by the network side equipment 100 is inputted to a controller for controlling a camera to track and capture the target object.

For example, the group of wild animals may be a migrating herd of Tibetan antelopes.

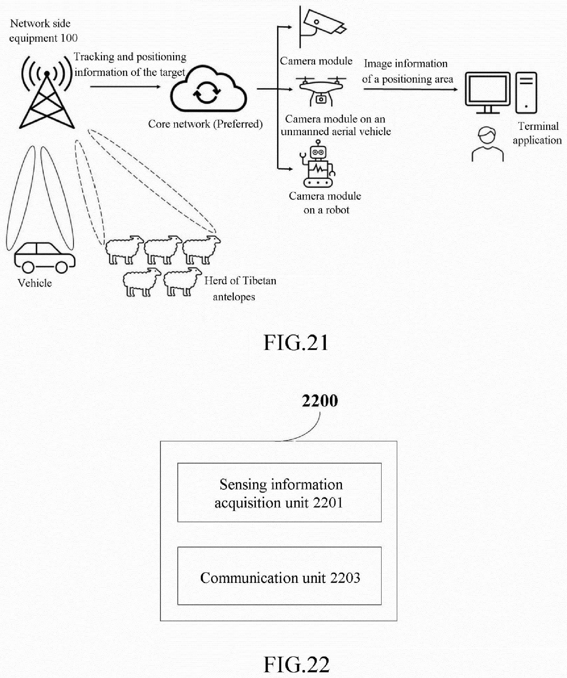

FIG. 21 is a schematic diagram illustrating tracking on a target object and processing of tracking data according to an embodiment of the present disclosure. FIG. 21 illustrates that the target object may be a vehicle or a herd of Tibetan antelopes.

For example, in 5G remote video inspection, the tracking and positioning information of the target object obtained by the network side equipment 100 may be inputted to a controller of a camera (or a camera module) to control the camera module to focus on a positioning area matching the positioning information for tracking and capturing (for example, by adjusting a viewing angle of the camera). In other words, the camera module is driven by the positioning information to directionally capture a video, image and other data within the positioning area. In a case where the camera module is within a communication coverage of the network side equipment 100, the network side equipment 100 may communicate directly with the camera module. The camera module may be connected to the network side equipment 100 via a wired connection and arranged at a position near the network side equipment 100 (for example, on a base station tower). Alternatively, the camera module may be arranged on an unmanned aerial vehicle, a robot or another device separate from the network side equipment 100, and obtains the positioning information from the network side equipment 100 through a wireless link, the core network, or other media, and moves to the positioning area or turns to the positioning direction to capture an image of the positioning area.

The camera module may send image information of the positioning area to a terminal application. The terminal application may be, for example, a traffic management system or an intelligent inspection system. The system comprehensively determines a tracking and inspection result based on image recognition, deep learning, and other intelligent techniques and algorithm processing.

For convenience, the network side equipment 100 is exemplified in the above description as a base station. The foregoing description is applicable to a case that the network side equipment 100 is a roadside unit.

In a case that both the network side equipment 100 and the to-be-transferred network side equipment are roadside units, and a roadside unit is capable of directly communicating with other roadside units and sending and/or receiving control signaling via a certain interface, the interface may replace the Xn interface for performing transfer of the target tracking task illustrated in FIG. 10. In a case where direct data transmission or control between roadside units is impossible, to realize the transfer of the target tracking task illustrated in FIG. 11, the roadside unit is required to be associated with a base station to form the following connection: the network side equipment 100 - the base station associated with the network side equipment 100 - ... (directly connecting or transmitting via other units such as the AMF) ... - the to-be-transferred network side equipment - the roadside unit associated with the to-be-transferred network side equipment, with interfaces provided between base stations for data transmission and control signaling.

In a case where the roadside unit is capable of performing information transfer or transmission, the transfer, transmission and other operations of the identification information may be executed by the roadside unit serving as the network side equipment 100, and the base station merely provides a data path to the core network for the roadside unit. In a case where the roadside unit has a signal processing capability, the tracking task may be carried out by the roadside unit serving as the network side equipment 100.

An electronic apparatus for wireless communications is further provided according to another embodiment of the present disclosure. FIG. 22 shows a block diagram of functional modules of an electronic apparatus 2200 for wireless communications according to another embodiment of the present disclosure.

As shown in FIG. 22, the electronic apparatus 2200 includes a sensing information acquisition unit 2201 and a communication unit 2203. The sensing information acquisition unit 2201 is configured to sense, for a target object that is within a sensing coverage of a network side equipment providing a service for the electronic apparatus 2200 and establishes no communication connection with the network side equipment, the target object to acquire sensing information about the target object. The communication unit 2203 is configured to send the sensing information to the network side equipment for the network side equipment to perform target tracking on the target object based on the sensing information. It should be understood that the functional units shown in the electronic apparatus 2200 in FIG. 22 are merely logical modules defined according to specific functions thereof, and are not intended to limit a specific implementation.

The sensing information acquisition unit 2201 and the communication unit 2203 may be implemented by one or more processing circuitries. The processing circuitry may be implemented as, for example, a chip.

The electronic apparatus 2200, for example, may be arranged on a user equipment side or may be communicatively connected to a user equipment. Here, it should be noted that the electronic apparatus 2200 may be implemented at a chip level or at an apparatus level. For example, the electronic apparatus 2200 may operate as the user equipment itself and may further include a memory, a transceiver (not shown), and other external devices. The memory may be configured to store programs to be executed by the user equipment to implement various functions and related data information. The transceiver may include one or more communication interfaces to support communications with different devices (for example, a base station, or another user equipment). An implementation of the transceiver is not limited here.

The wireless communication system according to the present disclosure may be a 5G NR communication system, a 5G+ communication system, or a 6G communication system. Further, the wireless communication system according to the present disclosure may include a non-terrestrial network. Alternatively, the wireless communication system according to the present disclosure may further include a terrestrial network. In addition, those skilled in the art may understand that the wireless communication system according to the present disclosure may be a 4G or 3G communication system.

As an example, the network side equipment in the embodiment of the electronic apparatus 2200 may be the network side equipment 100 mentioned above. As another example, the electronic apparatus 2200 may be the sensing apparatus described in the embodiment of the network side equipment 100 above.

The electronic apparatus 2200 according to an embodiment of the present disclosure is capable of performing cooperative sensing with the network side equipment providing service thereto, which helps enhance the robustness of the target tracking performed by the network side equipment and obtain more accurate target tracking information.

As an example, the communication unit 2203 may be configured to receive a sensing request for sensing the target object broadcasted by the network side equipment, and return, in response to the sensing request, a confirmation to the network side equipment to notify the network side equipment that the electronic apparatus is to sense the target object.

An exemplary process of cooperative sensing may be referred to the description of FIG. 20, which is not repeated here.

**EP 4 757 268 A1**

In the description of the network side equipment and the electronic apparatus for wireless communications in the above embodiments, some processes or methods are further disclosed. Hereinafter, an overview of the methods is given without repeating some of details discussed above. It should be noted that although disclosed in the description of the electronic apparatus for wireless communications, the methods do not necessarily adopt the components as described or be performed by those components. For example, an embodiment of the electronic apparatus for wireless communications may be implemented partially or entirely using hardware and/or firmware, and a method for wireless communications discussed below may be implemented entirely by a computer-executable program, although the method may employ the hardware and/or firmware for the electronic apparatus for wireless communications.

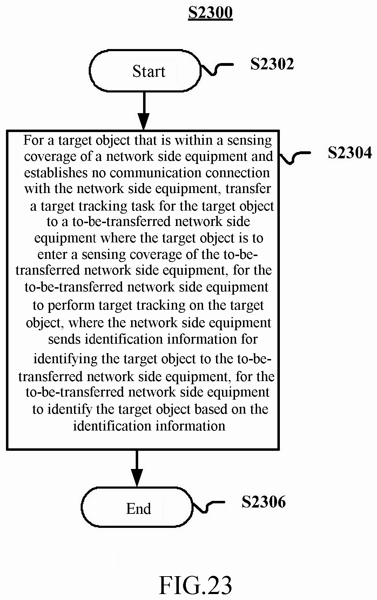

FIG. 23 is a flowchart illustrating a method S2300 for wireless communications performed by a network side equipment according to an embodiment of the present disclosure. The method S2300 starts from step S2302. In step S2304, for a target object that is within a sensing coverage of the network side equipment and establishes no communication connection with the network side equipment, a target tracking task for the target object is transferred to a to-be-transferred network side equipment where the target object is to enter a sensing coverage of the to-be-transferred network side equipment, for the to-be-transferred network side equipment to perform target tracking on the target object, where the network side equipment sends identification information for identifying the target object to the to-be-transferred network side equipment, for the to-be-transferred network side equipment to identify the target object based on the identification information. The method S2300 ends at step S2306.

This method may be performed, for example, by the network side equipment 100 as described above. For specific details, reference may be made to the description of relevant processes of the network side equipment 100, which is not repeated here.

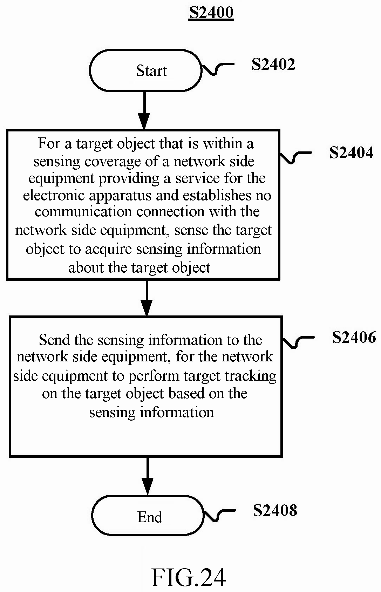

FIG. 24 is a flowchart illustrating a method S2400 for wireless communications performed by an electronic apparatus according to another embodiment of the present disclosure. The method S2400 starts from step S2402. In step S2404, for a target object that is within a sensing coverage of a network side equipment providing a service for the electronic apparatus and establishes no communication connection with the network side equipment, the target object is sensed to acquire sensing information about the target object. In step S2406, the sensing information is sent to the network side equipment, for the network side equipment to perform target tracking on the target object based on the sensing information. The method S2400 ends at step S2408.

This method may be performed, for example, by the electronic apparatus 2200 as described above. For specific details, reference may be made to the description of relevant processes of the electronic apparatus 2200, which is not repeated here.

The technology according to the present disclosure is applicable to various products.

The network side equipment 100 may be arranged at the base station side or connected to the base station. The base station may be implemented as any type of evolved node B (eNB) or gNB (5G base station). An eNB includes, for example, a macro eNB and a small eNB. A small eNB may be an eNB covering a cell smaller than a macro cell, such as a pico eNB, a micro eNB, or a home (femto) eNB. A similar situation may apply to the gNB. Alternatively, the base station may be implemented as any other type of base station, such as a NodeB or a base transceiver station (BTS). The base station may include a main body (also referred to as a base station equipment) configured to control wireless communications, and one or more remote radio heads (RRH) arranged in a different place from the main body. In addition, various types of electronic apparatuses may all operate as base stations by temporarily or semi-persistently performing base station functions.

The electronic apparatus 2200 may be implemented as various types of user equipment. The user equipment may be implemented as a mobile terminal (such as a smartphone, a tablet personal computer (PC), a notebook PC, a portable game terminal, a portable/dongle type mobile router, and a digital camera), or an in-vehicle terminal (such as a vehicle navigation device).The user equipment may be implemented as a terminal (also referred to as a machine type communication (MTC) terminal) that performs machine-to-machine (M2M) communications. Furthermore, the user equipment may be a wireless communication module (such as an integrated circuit module including a single wafer) installed on each of the above-mentioned terminals.

[Application Examples about Base Station]

(First Application Example)

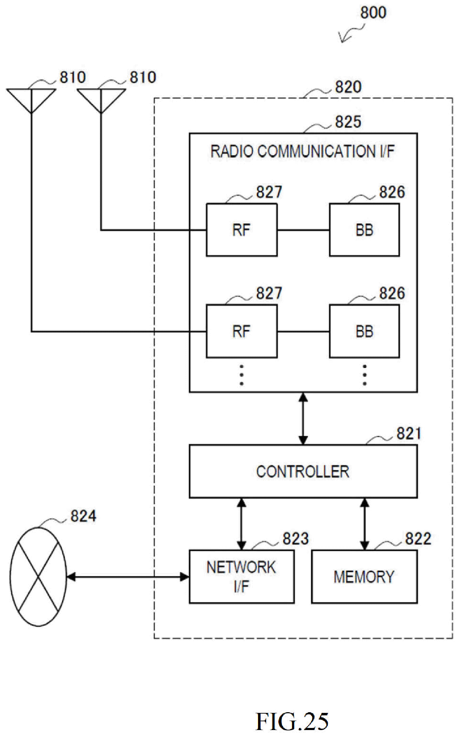

FIG. 25 is a block diagram showing a first example of a schematic configuration of an eNB or gNB to which the technology of the present disclosure can be applied. It should be noted that the following description is made with an eNB as an example, but is applied to a gNB. An eNB 800 includes one or more antennas 810 and a base station equipment 820. The base station equipment 820 and each antenna 810 may be connected to each other via an RF cable.

Each of the antennas 810 includes a single or multiple antenna elements (such as multiple antenna elements included in a Multi-Input Multi-Output (MIMO) antenna), and is used for the base station equipment 820 to transmit and receive wireless signals. As shown in FIG. 25, the eNB 800 may include multiple antennas 810. For example, the multiple antennas 810 may be compatible with multiple frequency bands used by the eNB 800. Although FIG. 25 shows an example in which the eNB 800 includes multiple antennas 810, the eNB 800 may include a single antenna 810.

The base station equipment 820 includes a controller 821, a memory 822, a network interface 823, and a radio communication interface 825.

The controller 821 may be, for example, a CPU or a DSP, and manipulate various functions of a higher layer of the base station equipment 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have a logical function for performing control such as radio resource control, radio bearer control, mobility management, admission control, and scheduling. The control may be executed in conjunction with nearby eNBs or core network nodes. The memory 822 includes an RAM and an ROM, and stores programs executed by the controller 821 and various types of control data (such as a terminal list, transmission power data, and scheduling data).

The network interface 823 is a communication interface for connecting the base station equipment 820 to a core network 824. The controller 821 may communicate with the core network node or another eNB via the network interface 823. In this case, the eNB 800 and the core network node or other eNBs may be connected to each other through a logical interface (such as an S1 interface and an X2 interface). The network interface 823 may be a wired communication interface, or a radio communication interface for a wireless backhaul line. If the network interface 823 is a radio communication interface, the network interface 823 may use a higher frequency band for wireless communications than the frequency band used by the radio communication interface 825.

The radio communication interface 825 supports any cellular communication scheme (such as Long-Term Evolution (LTE) and LTE-Advanced), and provides wireless connection to a terminal located in a cell of the eNB 800 via an antenna 810. The radio communication interface 825 may generally include, for example, a baseband (BB) processor 826 and an RF circuit 827. The BB processor 826 may execute, for example, encoding/decoding, modulation/demodulation, and multiplexing/demultiplexing, and execute various types of signal processing of layers (e.g., L1, Medium Access Control (MAC), Radio Link Control (RLC), and Packet Data Convergence Protocol (PDCP)). Instead of the controller 821, the BB processor 826 may have a part or all of the above-mentioned logical functions. The BB processor 826 may be a memory storing a communication control program, or a module including a processor and related circuits configured to execute the program. Updating the program may change the function of the BB processor 826. The module may be a card or blade inserted into a slot of the base station equipment 820. Alternatively, the module may be a chip mounted on a card or blade. In addition, the RF circuit 827 may include, for example, a mixer, a filter, and an amplifier, and transmit and receive a wireless signal via the antenna 810.

As shown in FIG. 25, the radio communication interface 825 may include multiple BB processors 826. For example, the multiple BB processors 826 may be compatible with multiple frequency bands used by the eNB 800. As shown in FIG. 25, the radio communication interface 825 may include multiple RF circuits 827. For example, the multiple RF circuits 827 may be compatible with multiple antenna elements. Although FIG. 25 shows an example in which the radio communication interface 825 includes multiple BB processors 826 and multiple RF circuits 827, the radio communication interface 825 may include a single BB processor 826 or a single RF circuit 827.

In the eNB 800 as shown in FIG. 25, when the network side equipment 100 is implemented as a base station, the transceiver of the network side equipment 100 may be implemented by the radio communication interface 825. At least a part of the function may be implemented by the controller 821. For example, the controller 821 can ensure service continuity of the target tracking by executing the functions of units in the network side equipment 100.

[Application Example about User Equipment]

(First Application Example)

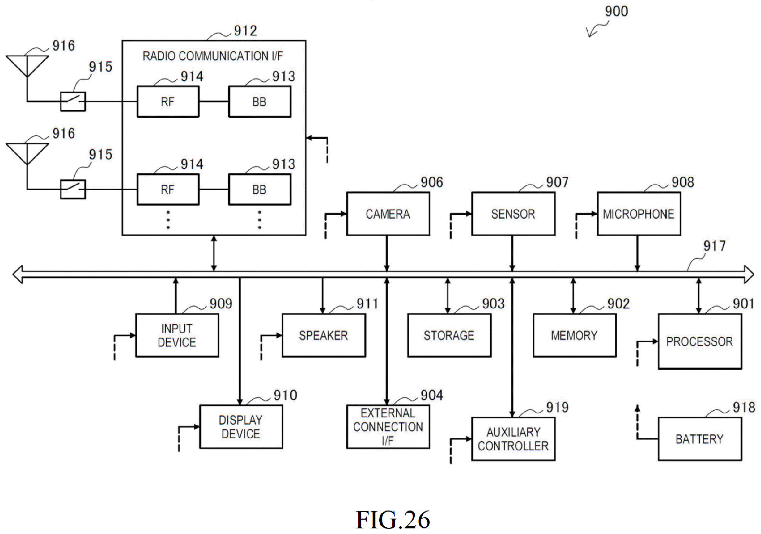

FIG. 26 is a block diagram showing an example of a schematic configuration of a smart phone 900 to which the technology of the present disclosure can be applied. The smart phone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of the application layer and other layers of the smart phone 900. The memory 902 includes an RAM and an ROM, and stores data and programs executed by the processor 901. The storage 903 may include a storage medium such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetic sensor, and an acceleration sensor. The microphone 908 converts sound inputted to the smart phone 900 into an audio signal. The input device 909 includes, for example, a touch sensor configured to detect a touch on a screen of the display device 910, a keypad, a keyboard, a button, or a switch, and receives an operation or information inputted from the user. The display device 910 includes a screen (such as a liquid crystal display (LCD) and an organic light emitting diode (OLED) display), and displays an output image of the smart phone 900. The speaker 911 converts the audio signal outputted from the smart phone 900 into sound.

The radio communication interface 912 supports any cellular communication scheme (such as LTE and LTE-Advanced), and executes wireless communications. The radio communication interface 912 may generally include, for example, a BB processor 913 and an RF circuit 914. The BB processor 913 may execute, for example, encoding/decoding, modulation/demodulation, and multiplexing/demultiplexing, and execute various types of signal processing for wireless communications. In addition, the RF circuit 914 may include, for example, a mixer, a filter, and an amplifier, and transmit and receive wireless signals via the antenna 916. It should be noted that although the figure shows a circumstance where one RF link is connected with one antenna, this is schematic, and a circumstance where one RF link is connected with multiple antennas through multiple phase shifters is possible. The radio communication interface 912 may be a chip module on which the BB processor 913 and the RF circuit 914 are integrated. As shown in FIG. 26, the radio communication interface 912 may include multiple BB processors 913 and multiple RF circuits 914. Although FIG. 26 shows an example in which the radio communication interface 912 includes multiple BB processors 913 and multiple RF circuits 914, the radio communication interface 912 may include a single BB processor 913 or a single RF circuit 914.

Furthermore, in addition to the cellular communication scheme, the radio communication interface 912 may support other types of wireless communication schemes, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits included in the radio communication interface 912 (e.g., circuits for different wireless communication schemes).

Each of the antennas 916 includes a single or multiple antenna elements (such as multiple antenna elements included in a MIMO antenna), and is used for the radio communication interface 912 to transmit and receive wireless signals. As shown in FIG. 26, the smart phone 900 may include multiple antennas 916. Although FIG. 26 shows an example in which the smart phone 900 includes multiple antennas 916, the smart phone 900 may include a single antenna 916.

Furthermore, the smart phone 900 may include an antenna 916 for each wireless communication scheme. In this case, the antenna switch 915 may be omitted from the configuration of the smart phone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to each block of the smart phone 900 as shown in FIG. 26 via a feeder line, which is partially shown as a dashed line in the figure. The auxiliary controller 919 manipulates the least necessary function of the smart phone 900 in a sleep mode, for example.

In the smart phone 900 as shown in FIG. 26, in a case where the electronic apparatuses 2200 is implemented, for example, as a smart phone on the user equipment side, the transceiver of the electronic apparatus 2200 may be implemented by the radio communication interface 912. At least a part of the function may be implemented by the processor 901 or the auxiliary controller 919. For example, the processor 901 or the auxiliary controller 919 may perform cooperative sensing with the network side equipment providing service to the electronic apparatus 2200 by executing the functions of units in the electronic apparatus 2200 as described above.

(Second Application Example)

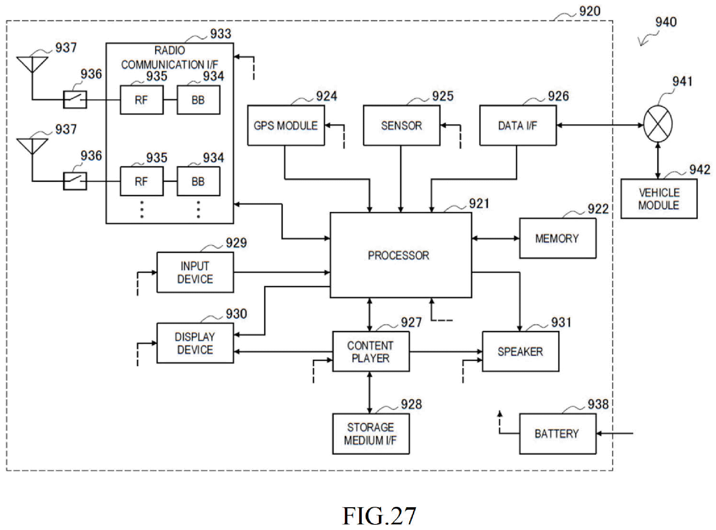

FIG. 27 is a block diagram showing an example of a schematic configuration of automobile navigation equipment 920 to which the technology of the present disclosure can be applied. The automobile navigation equipment 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls the navigation function and additional functions of the automobile navigation equipment 920. The memory 922 includes an RAM and an ROM, and stores data and programs executed by the processor 921.

The GPS module 924 measures a position (such as latitude, longitude, and altitude) of the automobile navigation equipment 920 by using a GPS signal received from a GPS satellite. The sensor 925 may include a group of sensors, such as a gyro sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD), which is inserted into the storage medium interface 928. The input device 929 includes, for example, a touch sensor configured to detect a touch on a screen of the display device 930, a button, or a switch, and receives an operation or information inputted from the user. The display device 930 includes a screen such as an LCD or OLED display, and displays an image of a navigation function or reproduced content. The speaker 931 outputs the sound of the navigation function or the reproduced content.

The radio communication interface 933 supports any cellular communication scheme, such as LTE and LTE-Advanced, and executes wireless communications. The radio communication interface 933 may generally include, for example, a BB processor 934 and an RF circuit 935. The BB processor 934 may execute, for example, encoding/decoding, modulation/demodulation, and multiplexing/demultiplexing, and execute various types of signal processing for wireless communications. In addition, the RF circuit 935 may include, for example, a mixer, a filter, and an amplifier, and transmit and receive wireless signals via the antenna 937. The radio communication interface 933 may be a chip module on which the BB processor 934 and the RF circuit 935 are integrated. As shown in FIG. 27, the radio communication interface 933 may include multiple BB processors 934 and multiple RF circuits 935. Although FIG. 27 shows an example in which the radio communication interface 933 includes multiple BB processors 934 and multiple circuits 935, the radio communication interface 933 may include a single BB processor 934 or a single RF circuit 935.

Furthermore, in addition to the cellular communication scheme, the radio communication interface 933 may support other types of wireless communication schemes, such as a short-range wireless communication scheme, a near field communication scheme, and a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits included in the radio communication interface 933 (e.g., circuits for different wireless communication schemes).

Each of the antennas 937 includes a single or multiple antenna elements (such as multiple antenna elements included in a MIMO antenna), and is used for the radio communication interface 933 to transmit and receive wireless signals. As shown in FIG. 27, the automobile navigation equipment 920 may include multiple antennas 937. Although FIG. 27 shows an example in which the automobile navigation equipment 920 includes multiple antennas 937, the automobile navigation equipment 920 may include a single antenna 937.

Furthermore, the automobile navigation equipment 920 may include an antenna 937 for each wireless communication scheme. In this case, the antenna switch 936 may be omitted from the configuration of the automobile navigation equipment 920.

The battery 938 supplies power to each block of the automobile navigation equipment 920 as shown in FIG. 27 via a feeder line, which is partially shown as a dashed line in the figure. The battery 938 accumulates electric power supplied from the vehicle.

In the automobile navigation equipment 920 as shown in FIG. 27, when the electronic apparatus 2200 is implemented, for example, as the automobile navigation equipment on the user equipment side, the transceiver of the electronic apparatus 2200 may be implemented by the radio communication interface 933. At least a part of the functions may be implemented by the processor 921. For example, the processor 921 may perform the functions of the units in the electronic apparatus 2200 to perform cooperative sensing with the network side equipment providing service to the electronic apparatus 2200.

The technology of the present disclosure may be implemented as an in-vehicle system (or vehicle) 940 including the automobile navigation equipment 920, the in-vehicle network 941, and one or more blocks in the vehicle module 942. The vehicle module 942 generates vehicle data (such as vehicle speed, engine speed, and failure information), and outputs the generated data to the in-vehicle network 941.

The basic principle of the present disclosure has been described above in conjunction with specific embodiments. However, it should be pointed out that those skilled in the art can understand that all or any step or component of the methods and apparatuses of the present disclosure may be implemented in any computing device (including a processor, a storage medium, and the like) or network of computing devices in a form of hardware, firmware, software, or a combination thereof. This can be achieved by those skilled in the art utilizing their basic circuit design knowledge or basic programming skills after reading the description of the present disclosure.

Moreover, the present disclosure further proposes a program product storing a machine-readable instruction code that, when read and executed by a machine, can execute the above-mentioned methods according to the embodiments of the present disclosure.

Accordingly, a storage medium for carrying the above-mentioned program product storing a machine-readable instruction code is further included in the present disclosure. The storage medium includes, but is not limited to, a floppy disk, an optical disk, a magneto-optical disk, a memory card, and a memory stick.

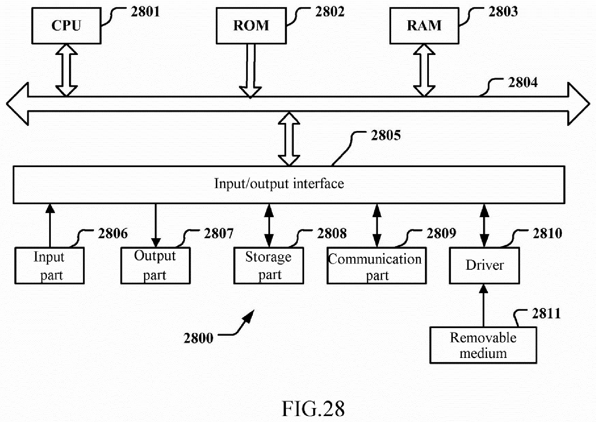

In a case where the present disclosure is implemented by software or firmware, a program constituting the software is installed from a storage medium or a network to a computer with a dedicated hardware structure (e.g., a general-purpose computer 2800 as shown in FIG. 28). The computer, when installed with various programs, can execute various functions and the like.

In FIG. 28, a central processing unit (CPU) 2801 executes various processing in accordance with a program stored in a read only memory (ROM) 2802 or a program loaded from a storage part 2808 to a random-access memory (RAM) 2803. The RAM 2803 further stores data required by the CPU 2801 for executing various processing and the like as needed. The CPU 2801, the ROM 2802, and the RAM 2803 are connected to each other via a bus 2804. An input/output interface 2805 is connected to the bus 2804.

The following components are connected to the input/output interface 2805: an input part 2806 (including a keyboard, a mouse, etc.), an output part 2807 (including a display, such as a cathode ray tube (CRT), a liquid crystal display (LCD), etc., and a speaker, etc.), a storage part 2808 (including a hard disk, etc.), and a communication part 2809 (including a network interface card such as an LAN card, a modem, etc.). The communication part 2809 executes communication processing via a network such as the Internet. The driver 2810 may be connected to the input/output interface 2805 as needed. A removable medium 2811, such as a magnetic disk, an optical disk, a magneto-optical disk, a semiconductor memory and the like, is installed on the driver 2810 as needed, so that a computer program read out therefrom is installed into the storage part 2808 as needed.

In a case where the above-mentioned series of processing is implemented by software, a program constituting the software is installed from a network such as the Internet or a storage medium such as the removable medium 2811.

Those skilled in the art should understand that this storage medium is not limited to the removable medium 2811 as shown in FIG. 28 which has a program stored therein and which is distributed separately from an apparatus to provide the program to users. Examples of the removable medium 2811 include a magnetic disk (including a floppy disk (registered trademark)), an optical disk (including a compact disk read-only memory (CD-ROM) and a digital versatile disk (DVD)), a magneto-optical disk (including a mini disk (MD) (registered trademark)), and a semiconductor memory. Alternatively, the storage medium may be the ROM 2802, a hard disk included in the storage part 2808, etc. The storage medium stores a program and is distributed to the user along with an apparatus in which the storage medium is incorporated.

It should be further pointed out that in the apparatuses, methods and systems of the present disclosure, the components or steps may be decomposed and/or recombined. Such decomposition and/or recombination should be regarded as an equivalent solution of the present disclosure. Moreover, the steps of executing the above-mentioned series of processing may naturally be executed in a chronological order as the described order, but do not necessarily need to be executed in the chronological order. Some steps may be executed in parallel or independently of each other.

Finally, it should be noted that, the terms "include", "comprise" or any other variants thereof are intended to cover non-exclusive inclusion, so that a process, method, article or apparatus that includes a series of elements not only includes the elements, but also includes other elements that are not explicitly listed, or further includes elements inherent to the process, method, article, or apparatus. Furthermore, in the absence of more restrictions, an element defined by a sentence "including one..." does not exclude existence of other identical elements in a process, method, article, or apparatus that includes the element.

Although the embodiments of the present disclosure have been described above in detail in conjunction with the accompanying drawings, it should be appreciated that, the above-described embodiments are only used to illustrate the present disclosure and do not constitute a limitation to the present disclosure. For those skilled in the art, various modifications and changes may be made to the above-mentioned embodiments without departing from the essence and scope of the present disclosure. Therefore, the scope of the present disclosure is defined only by the appended claims and equivalent meanings thereof.

This technology may be implemented as follows.

Solution 1. A network side equipment for wireless communications, comprising:
processing circuitry configured to:

transfer, for a target object that is within a sensing coverage of the network side equipment and establishes no communication connection with the network side equipment, a target tracking task for the target object to a to-be-transferred network side equipment where the target object is to enter a sensing coverage of the to-be-transferred network side equipment, for the to-be-transferred network side equipment to perform target tracking on the target object,

wherein, the processing circuitry is configured to send identification information for identifying the target object to the to-be-transferred network side equipment, for the to-be-transferred network side equipment to identify the target object based on the identification information.

Solution 2. The network side equipment according to solution 1, wherein the processing circuitry is configured to:

stop, after receiving an instruction of identifying the target object from the to-be-transferred network side equipment, sending the identification information to the to-be-transferred network side equipment;

verify, based on verification information that is received from the to-be-transferred network side equipment and used for verifying the target object, whether the to-be-transferred network side equipment succeeds in identifying the target object; and

stop performing target tracking on the target object in a case of verifying, based on the verification information, that the to-be-transferred network side equipment succeeds in identifying the target object.

Solution 3. The network side equipment according to solution 1 or 2, wherein the processing circuitry is configured to transfer the target tracking task based on an Xn interface.

Solution 4. The network side equipment according to solution 3, wherein the processing circuitry is configured to, through the Xn interface:

send, to the to-be-transferred network side equipment, a request for transferring the target tracking task, and receive, from the to-be-transferred network side equipment, confirmation for the request;

send the identification information to the to-be-transferred network side equipment; and

receive, from the to-be-transferred network side equipment, verification information for verifying the target object.

Solution 5. The network side equipment according to solution 1 or 2, wherein the processing circuitry is configured to transfer the target tracking task based on an N2 interface.

Solution 6. The network side equipment according to solution 5, wherein the processing circuitry is configured to:

send, to the to-be-transferred network side equipment through an Access and Mobility Management Function AMF, a request for transferring the target tracking task, and receive, from the to-be-transferred network side equipment through the AMF, confirmation for the request;

send the identification information to the to-be-transferred network side equipment through a User Plane Function UPF; and

receive verification information for verifying the target object from the to-be-transferred network side equipment through the UPF.

Solution 7. The network side equipment according to any one of solutions 1 to 6, wherein the processing circuitry is configured to: trigger transfer of the target tracking task, based on an event indicating that the target object is to move from the sensing coverage of the network side equipment into the sensing coverage of the to-be-transferred network side equipment.

Solution 8. The network side equipment according to solution 7, wherein the event comprises that the target object is detected, by the network side equipment based on positioning information of the target object, to move out of the sensing coverage of the network side equipment.

Solution 9. The network side equipment according to solution 7, wherein the event comprises that an amplitude of an echo received by the network side equipment from the target object remains below a predetermined threshold for a predetermined duration and continues to decrease.

Solution 10. The network side equipment according to any one of solutions 1 to 9, wherein the processing circuitry is configured to, during target tracking on the target object:

send sensing signals to the target object via a plurality of beams,

receive echo signals corresponding to the sensing signals from the target object via the plurality of beams, and

adaptively adjust included angles between the plurality of beams and/or a central axis of the plurality of beams based on a comparison of amplitudes of the echo signals corresponding to the plurality of beams, to obtain precise positioning information of the target object.

Solution 11. The network side equipment according to solution 10, wherein

the processing circuitry is configured to send the precise positioning information, as the identification information, to the to-be-transferred network side equipment, or

the processing circuitry is configured to, upon receiving a request for precise information for identifying the target object from the to-be-transferred network side equipment, send the precise positioning information as the precise information to the to-be-transferred network side equipment.

Solution 12. The network side equipment according to solution 10 or 11, wherein the processing circuitry is configured to acquire a size of the target object for initializing the included angles between the plurality of beams.

Solution 13. The network side equipment according solution 12, wherein a number of the plurality of beams is determined based on the size of the target object and/or an accuracy requirement of the target tracking task.

Solution 14. The network side equipment according to any one of solutions 10 to 13, wherein the processing circuitry is configured to:

determine a central axis of the plurality of beams that aligns with a center of the target object,

construct a graphic enclosing the target object with the central axis as a center, and

perform three-dimensional beamforming to form the plurality of beams respectively pointing to a perimeter of the graphic.

Solution 15. The network side equipment according solution 14, wherein the processing circuitry is configured to expand the perimeter and cause the plurality of beams to respectively point to the perimeter to adjust the included angles between the plurality of beams, in response to a predetermined number of beams among the plurality of beams satisfying the following condition: for each beam among the predetermined number of beams, a magnitude of an echo signal corresponding to the beam being greater than or equal to a predetermined magnitude threshold, and a slope of a variation curve representing the magnitude of the echo signal corresponding to the beam relative to an included angle between the beam and the central axis being less than a predetermined slope threshold.

Solution 16. The network side equipment according solution 14, wherein the processing circuitry is configured to reduce the perimeter and cause the plurality of beams to respectively point to the perimeter to adjust the included angles between the plurality of beams, in response to a predetermined number of beams among the plurality of beams satisfying the following condition: for each beam among the predetermined number of beams, a magnitude of an echo signal corresponding to the beam being less than a predetermined magnitude threshold, and a slope of a variation curve representing the magnitude of the echo signal corresponding to the beam relative to an included angle between the beam and the central axis being less than a predetermined slope threshold.

Solution 17. The network side equipment according solution 14, wherein the processing circuitry is configured to determine that the plurality of beams are respectively aligned with edges of the target object, in response to a predetermined number of beams among the plurality of beams satisfying the following condition: for each beam among the predetermined number of beams, a magnitude of an echo signal corresponding to the beam falling within a predetermined amplitude range, and a slope of a variation curve representing the magnitude of the echo signal corresponding to the beam relative to an included angle between the beam and the central axis being greater than or equal to a predetermined slope threshold.

Solution 18. The network side equipment according solution 14, wherein the processing circuitry is configured to: in response to a difference between magnitudes of the echo signals respectively corresponding to the plurality of beams exceeding a predetermined amplitude difference threshold, adjust the central axis toward a direction of a quadrant or toward a direction of a beam corresponding to a maximum echo signal magnitude, until the difference between magnitudes of the echo signals respectively corresponding to the plurality of beams is less than a predetermined difference threshold, wherein the quadrant comprises more than a predetermined number of beams corresponding to echo signals whose magnitudes are greater than or equal to a predetermined beam amplitude threshold.

Solution 19. The network side equipment according any one of solutions 1 to 18, wherein the processing circuitry is configured to receive, from sensing apparatuses having sensing function, sensing information obtained by sensing the object target, and perform target tracking on the target object based on the sensing information.

Solution 20. The network side equipment according to solution 19, wherein the processing circuitry is configured to:

send, through broadcasting, a sensing request for sensing the target object to neighboring apparatuses located within a predetermined range of the network side equipment, and

select, based on an orientation of the target object, the sensing apparatuses from neighboring apparatuses that return confirmations for the sensing request.

Solution 21. The network side equipment according to any one of solutions 1 to 20, wherein

the target object is a group of wild animals, and

positioning information of the target object obtained by the network side equipment is inputted to a controller for controlling a camera to track and capture the target object.

Solution 22. The network side equipment according to any one of solutions 1 to 21, wherein the network side equipment is a base station.

Solution 23. The network side equipment according to any one of solutions 1 to 2 and 7 to 21, wherein the network side equipment is a roadside unit.

Solution 24. An electronic apparatus for wireless communications, comprising a processing circuitry configured to:

sense, for a target object that is within a sensing coverage of a network side equipment providing a service for the electronic apparatus and establishes no communication connection with the network side equipment, the target object to acquire sensing information about the target object; and

send the sensing information to the network side equipment for the network side equipment to perform target tracking on the target object based on the sensing information.

Solution 25. The electronic apparatus according to solution 24, wherein the processing circuitry is configured to:

receive a sensing request for sensing the target object broadcasted by the network side equipment, and
return, in response to the sensing request, a confirmation to the network side equipment to notify the network side equipment that the electronic apparatus is to sense the target object.

Solution 26. A method for wireless communications performed by a network side equipment, comprising:

transferring, for a target object that is within a sensing coverage of the network side equipment and establishes no communication connection with the network side equipment, a target tracking task for the target object to a to-be-transferred network side equipment where the target object is to enter a sensing coverage of the to-be-transferred network side equipment, for the to-be-transferred network side equipment to perform target tracking on the target object,

wherein, the network side equipment sends identification information for identifying the target object to the to-be-transferred network side equipment, for the to-be-transferred network side equipment to identify the target object based on the identification information.

Solution 27. A method for wireless communications performed by an electronic apparatus, comprising:

sensing, for a target object that is within a sensing coverage of a network side equipment providing a service for the electronic apparatus and establishes no communication connection with the network side equipment, the target object to acquire sensing information about the target object; and

sending the sensing information to the network side equipment for the network side equipment to perform target tracking on the target object based on the sensing information.

Solution 28. A computer-readable storage medium storing computer-executable instructions, wherein the computer-executable instructions are executed to implement the method for wireless communications according to solution 26 or 27.

**Claims**

1. A network side equipment for wireless communications, comprising:

processing circuitry configured to,
transfer, for a target object that is within a sensing coverage of the network side equipment and establishes no communication connection with the network side equipment, a target tracking task for the target object to a to-be-transferred network side equipment where the target object is to enter a sensing coverage of the to-be-transferred network side equipment, for the to-be-transferred network side equipment to perform target tracking on the target object,
wherein, the processing circuitry is configured to send identification information for identifying the target object to the to-be-transferred network side equipment, for the to-be-transferred network side equipment to identify the target object based on the identification information.

2. The network side equipment according to claim 1, wherein the processing circuitry is configured to:

stop, after receiving an instruction of identifying the target object from the to-be-transferred network side equipment, sending the identification information to the to-be-transferred network side equipment;
verify, based on verification information that is received from the to-be-transferred network side equipment and used for verifying the target object, whether the to-be-transferred network side equipment succeeds in identifying the target object; and
stop performing target tracking on the target object in a case of verifying, based on the verification information, that the to-be-transferred network side equipment succeeds in identifying the target object.

3. The network side equipment according to claim 1 or 2, wherein the processing circuitry is configured to transfer the target tracking task based on an Xn interface.

4. The network side equipment according to claim 3, wherein the processing circuitry is configured to, through the Xn interface:

send, to the to-be-transferred network side equipment, a request for transferring the target tracking task, and receive, from the to-be-transferred network side equipment, confirmation for the request;
send the identification information to the to-be-transferred network side equipment; and
receive, from the to-be-transferred network side equipment, verification information for verifying the target object.

5. The network side equipment according to claim 1 or 2, wherein the processing circuitry is configured to transfer the target tracking task based on an N2 interface.

6. The network side equipment according to claim 5, wherein the processing circuitry is configured to:

send, to the to-be-transferred network side equipment through an Access and Mobility Management Function AMF, a request for transferring the target tracking task, and receive, from the to-be-transferred network side equipment through the AMF, confirmation for the request;
send the identification information to the to-be-transferred network side equipment through a User Plane Function UPF; and
receive verification information for verifying the target object from the to-be-transferred network side equipment through the UPF.

7. The network side equipment according to any one of claims 1 to 6, wherein the processing circuitry is configured to: trigger transfer of the target tracking task, based on an event indicating that the target object is to move from the sensing coverage of the network side equipment into the sensing coverage of the to-be-transferred network side equipment.

8. The network side equipment according to claim 7, wherein the event comprises that the target object is detected, by the network side equipment based on positioning information of the target object, to move out of the sensing coverage of the network side equipment.

9. The network side equipment according to claim 7, wherein the event comprises that an amplitude of an echo received by the network side equipment from the target object remains below a predetermined threshold for a predetermined duration and continues to decrease.

10. The network side equipment according to any one of claims 1 to 9, wherein the processing circuitry is configured to, during target tracking on the target object:

send sensing signals to the target object via a plurality of beams,
receive echo signals corresponding to the sensing signals from the target object via the plurality of beams, and
adaptively adjust included angles between the plurality of beams and/or a central axis of the plurality of beams based on a comparison of amplitudes of the echo signals corresponding to the plurality of beams, to obtain precise positioning information of the target object.

11. The network side equipment according to claim 10, wherein

the processing circuitry is configured to send the precise positioning information, as the identification information, to the to-be-transferred network side equipment, or
the processing circuitry is configured to, upon receiving a request for precise information for identifying the target object from the to-be-transferred network side equipment, send the precise positioning information as the precise information to the to-be-transferred network side equipment.

12. The network side equipment according to claim 10 or 11, wherein the processing circuitry is configured to acquire a size of the target object for initializing the included angles between the plurality of beams.

13. The network side equipment according to claim 12, wherein a number of the plurality of beams is determined based on the size of the target object and/or an accuracy requirement of the target tracking task.

14. The network side equipment according to any one of claims 10 to 13, wherein the processing circuitry is configured to:

determine a central axis of the plurality of beams that aligns with a center of the target object,
construct a graphic enclosing the target object with the central axis as a center, and
perform three-dimensional beamforming to form the plurality of beams respectively pointing to a perimeter of the graphic.

15. The network side equipment according to claim 14, wherein the processing circuitry is configured to expand the perimeter and cause the plurality of beams to respectively point to the perimeter to adjust the included angles between the plurality of beams, in response to a predetermined number of beams among the plurality of beams satisfying the following condition: for each beam among the predetermined number of beams, a magnitude of an echo signal corresponding to the beam being greater than or equal to a predetermined magnitude threshold, and a slope of a variation curve representing the magnitude of the echo signal corresponding to the beam relative to an included angle between the beam and the central axis being less than a predetermined slope threshold.

16. The network side equipment according to claim 14, wherein the processing circuitry is configured to reduce the perimeter and cause the plurality of beams to respectively point to the perimeter to adjust the included angles between the plurality of beams, in response to a predetermined number of beams among the plurality of beams satisfying the following condition: for each beam among the predetermined number of beams, a magnitude of an echo signal corresponding to the beam being less than a predetermined magnitude threshold, and a slope of a variation curve representing the magnitude of the echo signal corresponding to the beam relative to an included angle between the beam and the central axis being less than a predetermined slope threshold.

17. The network side equipment according to claim 14, wherein the processing circuitry is configured to determine that the plurality of beams are respectively aligned with edges of the target object, in response to a predetermined number of beams among the plurality of beams satisfying the following condition: for each beam among the predetermined number of beams, a magnitude of an echo signal corresponding to the beam falling within a predetermined amplitude range, and a slope of a variation curve representing the magnitude of the echo signal corresponding to the beam relative to an included angle between the beam and the central axis being greater than or equal to a predetermined slope threshold.

18. The network side equipment according to claim 14, wherein the processing circuitry is configured to: in response to a difference between magnitudes of the echo signals respectively corresponding to the plurality of beams exceeding a predetermined amplitude difference threshold, adjust the central axis toward a direction of a quadrant or toward a direction of a beam corresponding to a maximum echo signal magnitude, until the difference between magnitudes of the echo signals respectively corresponding to the plurality of beams is less than a predetermined difference threshold, wherein the quadrant comprises more than a predetermined number of beams corresponding to echo signals whose magnitudes are greater than or equal to a predetermined beam amplitude threshold.

19. The network side equipment according to any one of claims 1 to 18, wherein the processing circuitry is configured to receive, from sensing apparatuses having sensing function, sensing information obtained by sensing the object target, and perform target tracking on the target object based on the sensing information.

20. The network side equipment according to claim 19, wherein the processing circuitry is configured to:

send, through broadcasting, a sensing request for sensing the target object to neighboring apparatuses located within a predetermined range of the network side equipment, and
select, based on an orientation of the target object, the sensing apparatuses from neighboring apparatuses that return confirmations for the sensing request.

21. The network side equipment according to any one of claims 1 to 20, wherein

the target object is a group of wild animals, and
positioning information of the target object obtained by the network side equipment is inputted to a controller for controlling a camera to track and capture the target object.

22. The network side equipment according to any one of claims 1 to 21, wherein the network side equipment is a base station.

23. The network side equipment according to any one of claims 1 to 2 and 7 to 21, wherein the network side equipment is a roadside unit.

24. An electronic apparatus for wireless communications, comprising:

processing circuitry configured to,
sense, for a target object that is within a sensing coverage of a network side equipment providing a service for the electronic apparatus and establishes no communication connection with the network side equipment, the target object to acquire sensing information about the target object; and
send the sensing information to the network side equipment for the network side equipment to perform target tracking on the target object based on the sensing information.

25. The electronic apparatus according to claim 24, wherein the processing circuitry is configured to:

receive a sensing request for sensing the target object broadcasted by the network side equipment, and
return, in response to the sensing request, a confirmation to the network side equipment to notify the network side equipment that the electronic apparatus is to sense the target object.

26. A method for wireless communications performed by a network side equipment, comprising:

transferring, for a target object that is within a sensing coverage of the network side equipment and establishes no communication connection with the network side equipment, a target tracking task for the target object to a to-be-transferred network side equipment where the target object is to enter a sensing coverage of the to-be-transferred network side equipment, for the to-be-transferred network side equipment to perform target tracking on the target object,
wherein, the network side equipment sends identification information for identifying the target object to the to-be-transferred network side equipment, for the to-be-transferred network side equipment to identify the target object based on the identification information.

27. A method for wireless communications performed by an electronic apparatus, comprising:

sensing, for a target object that is within a sensing coverage of a network side equipment providing a service for the electronic apparatus and establishes no communication connection with the network side equipment, the target object to acquire sensing information about the target object; and

sending the sensing information to the network side equipment for the network side equipment to perform target tracking on the target object based on the sensing information.

28. A computer-readable storage medium storing computer-executable instructions, wherein the computer-executable instructions are executed to implement the method for wireless communications according to claim 26 or 27.

100

Processing unit **101**

Providing unit **103**

FIG.1

Network side
equipment 100

Detect target object

Network side
equipment 100

Track target object

(a)

(b)

FIG.2

EP 4 757 268 A1

FIG.3

FIG.4

FIG.5

FIG.6

FIG.7

FIG.8

Network side
equipment 100

To-be-transferred network
side equipment

S1. Transfer request

S2. Confirmation for the transfer request

S3. Identification information

S4. Detect candidate
targets

S5. Request for high-precision information

S6. Provide high-precision information

S7. Target identification

S8. Successful identification indication

S9. Verification information

S10. Confirm successful target locking

S11. Stop target tracking

S11. Start target tracking

FIG.9

FIG.10

FIG.11

Service request → S1. Perform beam scanning to detect targets

S2. Evaluate whether to activate high-precision target tracking

No          Yes

S5. Existing target tracking method

S3. Adjust included angles between multiple beams

S4. Adjust directions of central axes of the multiple beams

High-precision target tracking

FIG.12

Base station

$\theta^{(1)}$

$\theta^{(2)}$

$v_r^{(1)}$

$v^{(1)}$

$v_t^{(1)}$

$v_r^{(2)}$

$v^{(2)}$

$v_t^{(2)}$

FIG.13

Perimeter

Direction of beam
is on the perimeter

Beam

Central axis

Network side equipment 100

FIG.14

Perimeter

Initial vector direction

Synthesized vector direction

Initial vector direction

Central axis

Network side equipment 100

FIG.15

(a)

(b)

# FIG.16

(a)

(b)

FIG.17

FIG.18

FIG.19

Network side
equipment 100       Sensing apparatus       Target object

S1. Measurement control

S2. Cooperative sensing
decision

S3. Broadcast cooperative
sensing request

S4. Confirmation for the
cooperative sensing request

S5. Scheduling

S6. Sensing result

FIG.20

FIG.21

**2200**

FIG.22

S2300

Start ⟋ S2302

For a target object that is within a sensing coverage of a network side equipment and establishes no communication connection with the network side equipment, transfer a target tracking task for the target object to a to-be-transferred network side equipment where the target object is to enter a sensing coverage of the to-be-transferred network side equipment, for the to-be-transferred network side equipment to perform target tracking on the target object, where the network side equipment sends identification information for identifying the target object to the to-be-transferred network side equipment, for the to-be-transferred network side equipment to identify the target object based on the identification information ⟋ S2304

End ⟋ S2306

FIG.23

S2400

Start — S2402

For a target object that is within a sensing coverage of a network side equipment providing a service for the electronic apparatus and establishes no communication connection with the network side equipment, sense the target object to acquire sensing information about the target object — S2404

Send the sensing information to the network side equipment, for the network side equipment to perform target tracking on the target object based on the sensing information — S2406

End — S2408

FIG.24

FIG.25

FIG.26

EP 4 757 268 A1

FIG.27

EP 4 757 268 A1

FIG.28

## INTERNATIONAL SEARCH REPORT

| International application No. |
|---|
| **PCT/CN2024/107788** |

**A. CLASSIFICATION OF SUBJECT MATTER**

H04L43/02(2022.01)i; H04W64/00(2009.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI, VCN, CNKI: 感知, 感测, 目标, 对象, 车, 移动, 转交, 切换, 移交, 识别, sensing, object, vehicle, car, mobility, handover, switch, identify, recognition

**C. DOCUMENTS CONSIDERED TO BE RELEVANT**

| Category* | Citation of document, with indication, where appropriate, of the relevant passages | Relevant to claim No. |
|---|---|---|
| X | WO 2023077010 A1 (QUALCOMM INC.) 04 May 2023 (2023-05-04) description, paragraphs 50-72 | 24-25, 27-28 |
| A | CN 111832343 A (BEIJING JINGDONG SHANGKE INFORMATION TECHNOLOGY CO., LTD. et al.) 27 October 2020 (2020-10-27) entire document | 1-28 |
| A | CN 112566032 A (SUTENG INNOVATION TECHNOLOGY CO., LTD.) 26 March 2021 (2021-03-26) entire document | 1-28 |
| A | CN 113850209 A (GUANGZHOU WERIDE TECHNOLOGY CO., LTD.) 28 December 2021 (2021-12-28) entire document | 1-28 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 November 2024** | **11 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/107788**

| Patent document cited in search report | | | Publication date (day/month/year) | Patent family member(s) | Publication date (day/month/year) |
|---|---|---|---|---|---|
| WO | 2023077010 | A1 | 04 May 2023 | None | |
| CN | 111832343 | A | 27 October 2020 | None | |
| CN | 112566032 | A | 26 March 2021 | None | |
| CN | 113850209 | A | 28 December 2021 | None | |

**REFERENCES CITED IN THE DESCRIPTION**

**Patent documents cited in the description**

- CN 202310964751